# EUROPEAN PATENT SPECIFICATION

(11) **EP 1 408 251 B1**
(45) Date of publication and mention of the grant of the patent: **13.03.2013**
(21) Application number: 03022749.0
(22) Date of filing: 09.10.2003
(51) Int. Cl.: F16D 48/06

(54) **Vehicle control apparatus with clutch-released maintaining means**
Système de contrôle de véhicule avec moyens de maintien de désacouplement de l'embrayage
Fahrzeugsteuervorrichtung mit Mitteln zur Beibehaltung des Auskuppelzustandes

(30) Priority: 11.10.2002 JP 2002299355
(43) Date of publication of application: 14.04.2004
(73) Proprietor: TOYOTA JIDOSHA KABUSHIKI KAISHA, Toyota-shi, Aichi-ken, 471-8571 (JP)
(72) Inventor: Ido, Daisuke, Toyota-shi Aichi-ken, 471-8571 (JP)
(74) Representative: TBK

(56) References cited:
- FR-A1- 2 812 919
- GB-A- 2 125 136
- GB-A- 2 210 127
- JP-A- 9 324 826
- US-A- 6 148 975

## Description

### 1. Field of the Invention

The invention relates to control to prevent rattling in a vehicle provided with a clutch which is disposed midway in a power transmission path by which power is transmitted from a driving source for driving the vehicle to a transmission and which selectively enables and interrupts transmission of that power.

### 2. Description of the Related Art

One such control apparatus for a vehicle provided with a clutch is disclosed in JPA 2002-39230, for example. This control apparatus releases an automatic clutch when conditions such as the vehicle being stopped and a shift lever being in a non-driving position are fulfilled in order to prevent rattling due to gear grinding resulting from a change of rotation in the driving source being transmitted to the transmission.

A system in which a clutch is operated by the driver, for example, technology in which clutch operating means and the clutch are electrically connected, is generally known. This type of technology is disclosed in JPA 7-190102. It is conceivable that the aforementioned technology to prevent rattling can also be used in this kind of system.

When that rattling prevention technology is incorporated in this kind of system, however, and the clutch is released in order to prevent rattling, the clutch actually remains in the released state even when the driver performs an operation to apply the clutch, so the clutch operation and the clutch state do not match. Therefore, a feeling of unpleasantness may be imparted on the driver because the clutch is not applied as expected by the driver. This phenomenon is not limited to the construction in which the clutch operating means and the clutch are electrically connected. A feeling of unpleasantness may also be imparted on the driver when the clutch operating means and the clutch are connected by other methods when the foregoing type of rattling prevention technology is employed.

Document GB 2210127 A describes a clutch control for a motor vehicle. A friction clutch has a clutch releaser the position of which fixes the torque transmittable by the friction clutch. A setting drive positions the clutch releaser. A position indicator controls the setting drive and is coupled with a clutch pedal. The position indicator generates an electric control signal representing the position of the clutch pedal, and an electric adaptor device enforces a predetermined non-linear relationship between the position of the clutch pedal and the control signal. The setting drive comprises an electric position regulator circuit which adjusts the position of the clutch releaser, through an electrically controllable setting member, to a position fixed by the control signal.

Document US 6148975 A discloses a vehicle transmission system including a clutch control to eliminate neutral idle gear rattle. The vehicle transmission system includes an automated clutch operator. An electronic controller determines when the transmission is in a neutral condition and controls the automated clutch operator to move the clutch into a non-engaged condition. The electronic controller also determines when the vehicle engine is operating at an idle speed and causes the automated clutch operator to move the clutch into a non-engaged condition only when the engine is idling and the transmission is in a neutral condition.

### SUMMARY OF THE INVENTION

It is therefore an object of the invention to prevent rattling without imparting a feeling of unpleasantness on the driver in a vehicle provided with a clutch operating portion which is operated by the driver.

According to an example, a vehicle control apparatus is provided with a clutch which is disposed midway in a power transmission path by which power is transmitted from a driving source for driving a vehicle to a transmission and which selectively enables and interrupts transmission of that power; a clutch operating portion operated by a driver; clutch operating portion reflecting means for reflecting operation of the clutch operating portion in the clutch; a shift instructing portion which is operated by the driver and which instructs the transmission to shift; vehicle stopped state detecting means for detecting a stopped state of the vehicle; shift instruction detecting means for detecting an instructing state of the shift instructing portion; clutch operation detecting means for detecting an operating state of the clutch operating portion; and clutch-released maintaining means for stopping reflection of the operation of the clutch operating portion in the clutch by the clutch operating portion reflecting means and maintaining the clutch in a released state from after a condition for not reflecting operation of the clutch operating portion in the clutch has been fulfilled when a) the vehicle stopped state detecting means has detected that the vehicle is stopped, b) the shift instruction detecting means has detected that the shift instructing portion is being put in a non-driving position, and c) the clutch operation detecting means has detected an operation to release the clutch, until a condition for reflecting operation of the clutch operating portion in the clutch again has been fulfilled.

When the condition for not reflecting operation of the clutch operating portion in the clutch is fulfilled, the clutch-released maintaining means stops reflection of the operation of the clutch operating portion in the clutch by the clutch operating portion reflecting means and maintains the clutch in the released state. The clutch is kept in the released state until the condition for reflecting operation of the clutch operating portion in the clutch again has been fulfilled. The stopped state of the vehicle includes a state in which the vehicle is not moving at all, as well as a state in which movement of the vehicle is so little that the vehicle is considered to be virtually stopped.

According to this construction, after the driver stops the vehicle after performing an operation to release the clutch, such as when waiting at a stoplight, and puts the shift instructing portion into a non-driving position (e.g., neutral), even if the driver performs an operation to apply the clutch, the clutch operating portion reflecting means does not reflect that operation so the clutch is maintained in the released state. Therefore, torque from the power source is not transmitted to the transmission so rattling can be prevented. Because the vehicle is stopped and the driver has put the shift instructing portion into the non-driving position at this time, he or she will not feel an unpleasant sensation from the clutch operating portion reflecting means not reflecting the operation of the clutch operating portion in the clutch.

Accordingly, it is possible to prevent rattling without imparting a feeling of unpleasantness on the driver in a vehicle provided with a clutch operating portion which is operated by the driver.

A vehicle control apparatus according to an aspect of the invention is provided a clutch which is disposed midway in a power transmission path by which power is transmitted from a driving source for driving a vehicle to a transmission and which selectively enables and interrupts transmission of that power; a clutch operating portion operated by a driver; clutch operating portion reflecting means for reflecting operation of the clutch operating portion in the clutch; a shift instructing portion which is operated by the driver and which instructs the transmission to shift; vehicle stopped state detecting means for detecting a stopped state of the vehicle; shift instruction detecting means for detecting an instructing state of the shift instructing portion; clutch operation detecting means for detecting an operating state of the clutch operating portion; and clutch-released maintaining means for stopping reflection of the operation of the clutch operating portion in the clutch by the clutch operating portion reflecting means and maintaining the clutch in a released state from after a condition for not reflecting operation of the clutch operating portion in the clutch has been fulfilled when the clutch operation detecting means has detected an operation to switch the clutch from a released state to an applied state or an operation to apply the clutch, after a) the vehicle stopped state detecting means has detected that the vehicle is stopped, b) the shift instruction detecting means has detected that the shift instructing portion is being put in a non-driving position, and c) the clutch operation detecting means has detected an operation to release the clutch, until a condition for reflecting operation of the clutch operating portion in the clutch again has been fulfilled.

When the condition for not reflecting operation of the clutch operating portion in the clutch is fulfilled, the clutch-released maintaining means stops reflection of the operation of the clutch operating portion in the clutch by the clutch operating portion reflecting means and maintains the clutch in the released state. The clutch is kept in the released state until the condition for reflecting operation of the clutch operating portion in the clutch again has been fulfilled.

Therefore, when the driver stops the vehicle after performing an operation to release the clutch, such as when waiting at a stoplight, puts the transmission into neutral and then attempts to switch from the operation to release the clutch to an operation to apply the clutch, the clutch operating portion reflecting means does not reflect that operation and the clutch is maintained in the released state. Therefore, torque from the power source is not transmitted to the transmission so rattling can be prevented. Because the vehicle is stopped and the driver has put the shift instructing portion in the non-driving position at this time, he or she will not feel an unpleasant sensation from the clutch operating portion reflecting means stopping reflection of the operation of the clutch operating portion reflecting means in the clutch.

Also, it is conceivable that the condition for reflecting operation of the clutch operating portion in the clutch again is fulfilled when it has been detected that the driver is switching from an operation to release the clutch to an operation to apply the clutch in order to unlock lockup in the transmission, instead of when waiting at a stoplight. However, in this case as well, it is possible to temporarily turn the gears inside the transmission by setting the timing for detecting the switch from an operation to release the clutch to an operation to apply the clutch so that detection starts when the clutch is temporarily in a partially applied state. As a result, the operation to unlock lockup can also be effective. Even in this case in which the clutch is partially applied, because the gears inside the transmission rotate only temporarily, a rattling prevention effect is obtained after the vehicle is stopped, such as when waiting at a stoplight.

In this way, it is possible to prevent rattling without imparting a feeling of unpleasantness on the driver in a vehicle provided with a clutch operating portion which is operated by the driver.

When the condition for not reflecting operation of the clutch operating portion in the clutch is fulfilled, the clutch-released maintaining means stops reflection of the operation of the clutch operating portion in the clutch by the clutch operating portion reflecting means and keeps the clutch in the released state. The clutch is kept in the released state until the condition for reflecting operation of the clutch operating portion in the clutch again has been fulfilled.

Therefore, when the driver stops the vehicle after performing an operation to release the clutch, such as when waiting at a stoplight, puts the transmission into neutral and then attempts to switch from the operation to release the clutch to an operation to apply the clutch, the clutch operating portion reflecting means does not reflect that operation so the clutch is maintained in the released state. Therefore, torque from the power source is not transmitted to the transmission so rattling can be prevented. Because the vehicle is stopped and the driver has put the shift instructing portion in the non-driving position at this time, he or she will not feel an unpleasant sensation from the clutch operating portion reflecting means not reflecting the operation of the clutch operating portion in the clutch.

Also, because the driver performing an operation to apply the clutch is made a condition when the condition for not reflecting operation of the clutch operating portion in the clutch has been fulfilled in order for the driver to unlock lockup in the transmission, instead of when waiting at a stoplight, the clutch becomes applied temporarily just before the operation of the clutch operating portion is no longer reflected in the clutch. Therefore, because the gears inside the transmission are temporarily rotated so lockup can be unlocked, an unpleasant feeling is not imparted on the driver when lockup occurs. Because rotation of the gears inside the transmission at this time is only temporary, the rattling prevention effect is able to be obtained thereafter.

In this way, it is possible to prevent rattling without imparting a feeling of unpleasantness on the driver in a vehicle provided with a clutch operating portion which is operated by the driver.

In the vehicle control apparatus according to any one of the example the above described aspect, the clutch-released maintaining means may stop operation of the clutch operating portion from being reflected in the clutch by the clutch operating portion reflecting means and keep the clutch in the released state on the condition that condition for not reflecting operation of the clutch operating portion in the clutch has continued to be fulfilled for a waiting time until the condition for reflecting operation of the clutch operating portion in the clutch again has been fulfilled.

Even if the condition for not reflecting operation of the clutch operating portion in the clutch again has been fulfilled, it is conceivable that the driver may feel an unpleasant sensation immediately when the clutch is maintained in the released state when that condition is fulfilled only temporarily, such as when lockup occurs.

Therefore, the clutch-released maintaining means stops reflection of the operation of the clutch operating portion in the clutch by the clutch operating portion reflecting means and maintains the clutch in the released state on the condition that the condition for not reflecting operation of the clutch operating portion in the clutch has continued to be fulfilled for the waiting time. As a result, torque can be transmitted from the power source to the transmission via the clutch during that waiting time and lockup can be reliably unlocked by a clutch operation by the driver, so the driver feels no sense of unpleasantness. Also, once the waiting time elapses, rattling is able to be prevented, such as when at a stoplight or the like.

Further, the condition for reflecting operation of the clutch operating portion in the clutch again may also be fulfilled when an operation by the driver in order to start the vehicle running is estimated.

Accordingly, by having the clutch operating portion reflecting means reflect the operation of the clutch operating portion in the clutch again when an operation by the driver in order to start the vehicle is estimated, the driver is able to again operate the clutch so a feeling of unpleasantness can be prevented.

Also, the condition for reflecting operation of the clutch operating portion in the clutch again may also be fulfilled when the clutch operation detecting means detects that there has been a temporary switch from an operation to release the clutch in condition c) to an operation to apply the clutch and then a switch back to the operation to release the clutch again.

Accordingly, it is possible to estimate that the driver is attempting to continue running the vehicle again when he or she performs an operation to release the clutch. Therefore, by reflecting operation of the clutch operating portion in the clutch by the clutch operating portion reflecting means at this time, the driver is able to again operate the clutch so a feeling of unpleasantness can be prevented.

The condition for reflecting operation of the clutch operating portion in the clutch again in the example and the aspect of the invention may be fulfilled by the vehicle starting to run.

For example, it can be estimated that the driver is attempting to start to drive the vehicle again if the vehicle starts running by the brake being released when on a downward slope or the like. Accordingly, by reflecting operation of the clutch operating portion in the clutch by the clutch operating portion reflecting means from the time that the vehicle starts running, the driver is able to again operate the clutch so a feeling of unpleasantness can be prevented.

Also, while the driver is performing an operation to apply the clutch with the clutch operating portion, even if the vehicle unexpectedly starts to run, by reflecting operation of the clutch operating portion in the clutch again using the clutch operating portion reflecting means, the clutch is changed from the released state to the applied state, and the driver does not feel a sense of unpleasantness because he or she is able to operate the clutch again.

The condition for reflecting operation of the clutch operating portion in the clutch again in the example may be fulfilled by the shift instructing portion being shifted out of the non-driving position.

By having the condition for reflecting operation of the clutch operating portion in the clutch again be fulfilled when the shift instructing portion is shifted out of the non-driving position, the clutch operating portion reflecting means reflects operation of the clutch operating portion in the clutch again when the driver attempts to shift the shift instructing portion from a non-driving position (e.g., neutral) into a driving position (e.g., first speed) while performing an operation to apply the clutch. Accordingly, because the clutch operation by the driver is made possible again from the time the driver attempts to shift the shift instructing portion into the driving position, he or she feels no sense of unpleasantness.

In the foregoing aspect of the invention, the condition for reflecting operation of the clutch operating portion in the clutch again is fulfilled when both i) it has been detected by the clutch operation detecting means that there has been a temporary switch from an operation to release the clutch in condition c) to an operation to apply the clutch and then a switch back to the operation to release the clutch again, and ii) it has been detected by the shift instruction detecting means that the shift instructing portion is being shifted either out of the non-driving position or into a driving position.

Accordingly, when an operation to release the clutch is performed and the shift instructing portion is shifted either out of the non-driving position or into a driving position, it can be estimated that the driver is attempting to continue driving the vehicle. Accordingly, by reflecting operation of the clutch operating portion in the clutch with the clutch operating portion reflecting means from this time, the driver can operate the clutch again so he or she does not feel a sense of unpleasantness.

In the above example and the aspect of the invention, warning means may also be provided for outputting a warning with respect to a shift instruction when the shift instruction detecting means has detected that the shift instructing portion is being shifted out of the non-driving position or into to a driving position when the clutch-released maintaining means is stopping operation of the clutch operating portion from being reflected in the clutch by the clutch operating portion reflecting means and keeping the clutch in the released state.

When the clutch-released maintaining means is stopping the operation of the clutch operating portion from being reflected in the clutch by the clutch operating portion reflecting means, the shift instructing portion is able to be shifted into a driving position but the driver may feel a sense of unpleasantness.

Accordingly, by having the warning means output a warning when the driver is attempting to shift the shift instructing portion out of the non-driving position or into a driving position, the driver can be made aware of the fact that operation of the clutch operating portion is not being reflected in the clutch. As a result, an unpleasant sensation is not imparted to the driver and safety is also able to be improved.

In the example and the aspect of the invention, automatic clutch controlling means may also be provided for automatically applying and releasing the clutch based on a driving condition of an automatic clutch. Further, automatic clutch control starting means may be provided for operating the automatic clutch controlling means when the shift instruction detecting means has detected that the shift instructing portion is being shifted out of the non-driving position or into a driving position when the clutch-released maintaining means is stopping the operation of the clutch operating portion from being reflected in the clutch by the clutch operating portion reflecting means and maintaining the clutch in the released state.

With the construction having the automatic clutch controlling means, the automatic clutch controlling means may also be operated when the shift instruction detecting means has detected that the shift instructing portion is being shifted out of the non-driving position or into a driving position when the clutch-released maintaining means is stopping operation of the clutch operating portion from being reflected in the clutch by the clutch operating portion reflecting means.

The driver of the vehicle provided with the automatic clutch controlling means is aware of the fact that the clutch is automatically applied and released. Accordingly, when the driver shifts the shift instructing portion out of the non-driving position or into a driving position, it can be assumed that the clutch will operate automatically without the driver having to operate the clutch operating portion. Therefore, the driver feels no sense of unpleasantness even if the operation of the clutch operating portion by the driver and the actual state of the clutch do not match.

Also, the automatic clutch controlling means operates when a shift of the shift instructing portion out of the non-driving position or into a driving position is detected by the shift instruction detecting means. Accordingly, engagement of the gears in the transmission and application of the clutch can be reliably prevented from occurring simultaneously so the fear of damage to the transmission can be minimized or eliminated.

In the first, second, or third aspect of the invention, the clutch operating portion and the clutch may also be electronically connected such that the clutch operating portion reflecting means reflects operation of the clutch operating portion in the clutch.

As means for reflecting operation of the clutch operating portion in the clutch, a construction in which the clutch operating portion and the clutch are electrically connected may be used. For example, there may be means for applying and releasing the clutch by electrically detecting the operating state of the clutch operating portion, performing processing using an electronic circuit according to the detection results indicative of that operating state, and driving an electric actuator.

With this type of electrical connection, making the clutch reflect and not reflect operation of the clutch operating portion can be realized with a relatively simple construction. Further, the clutch operating portion may be such that, when a driver applies an operating force thereto, it outputs a signal to the clutch so that the clutch is made to be in the released state, and when the driver does not apply an operating force thereto, it outputs a signal to the clutch so that the clutch is made to be in the applied state.

The clutch operating portion may be a combination of a clutch pedal and a clutch stroke sensor or a clutch switch, for example, which outputs a signal to the clutch when a driver applies an operating force thereto so that the clutch is made to be in the released state, and which outputs a signal to the clutch when the driver does not apply an operating force thereto so that the clutch is made to be in the applied state. With this type of construction, in order to reduce the work by the driver, the driver does not need to apply operating force to the clutch operating portion when the vehicle is stopped, such as at a stoplight, and the clutch operating portion reflecting means can be put in a state in which it does not reflect the operation of the clutch operating portion in the clutch at this time. As a result, rattling is able to be prevented while reducing the work by the driver.

### BRIEF DESCRIPTION OF THE DRAWINGS

FIG. 1 is a block diagram schematically illustrating the construction of a vehicle control apparatus according to a first exemplary embodiment of the invention;
FIG. 2 is a flowchart illustrating a clutch driving routine executed by a clutch-by-wire ECU;
FIG. 3 is a map showing the relationship between an operation stroke amount PDLST and an actuator stroke amount ACTST when reflecting an operation of the clutch pedal in the clutch;
FIG. 4 is a flowchart showing a clutch control flag Xch setting routine according to the first exemplary embodiment;
FIG. 5 is a timing chart illustrating one example of control according to the first exemplary embodiment;
FIG. 6 is a timing chart illustrating another example of control according to the first exemplary embodiment;
FIG. 7 is a timing chart illustrating another example of control according to the first exemplary embodiment;
FIG. 8 is a timing chart illustrating another example of control according to the first exemplary embodiment;
FIG. 9 is a flowchart showing a routine A for setting a clutch control flag Xch according to a second exemplary embodiment of the invention;
FIG. 10 is a flowchart showing a routine B for setting the clutch control flag Xch according to the second exemplary embodiment;
FIG. 11 is a timing chart illustrating one example of control according to the second exemplary embodiment;
FIG. 12 is a timing chart illustrating another example of control according to the second exemplary embodiment;
FIG. 13 is a timing chart illustrating another example of control according to the second exemplary embodiment;
FIG. 14 is a timing chart illustrating another example of control according to the second exemplary embodiment;
FIG. 15 is a timing chart illustrating another example of control according to the second exemplary embodiment;
FIG. 16 is a timing chart illustrating one example of control according to a third exemplary embodiment of the invention;
FIG. 17 is a flowchart showing a routine A for setting a clutch control flag Xch according to a fourth exemplary embodiment of the invention;
FIG. 18 is a timing chart illustrating one example of control according to the fourth exemplary embodiment;
FIG. 19 is a flowchart showing a routine A for setting a clutch control flag Xch according to a fifth exemplary embodiment of the invention;
FIG. 20 is a flowchart showing a routine B for setting a clutch control flag Xch according to the fifth exemplary embodiment;
FIG. 21 is a timing chart illustrating one example of control according to the fifth exemplary embodiment;
FIG. 22 is a timing chart illustrating another example of control according to the fifth exemplary embodiment;
FIG. 23 is a timing chart illustrating another example of control according to the fifth exemplary embodiment;
FIG. 24 is a timing chart illustrating another example of control according to the fifth exemplary embodiment;
FIG. 25 is a timing chart illustrating another example of control according to the fifth exemplary embodiment;
FIG. 26 is a block diagram schematically illustrating the construction of a vehicle control apparatus according to a sixth exemplary embodiment of the invention;
FIG. 27 is a flowchart illustrating a clutch hydraulic pressure cut-off valve control routine executed by a clutch hydraulic pressure cut-off ECU;
FIGS. 28A and 28B are views illustrating a driving state of the clutch pedal and clutch when a hydraulic pressure cut-off valve is open;
FIGS. 29A and 29B are views illustrating a driving state of the clutch pedal and clutch when the hydraulic pressure cut-off valve is closed;
FIG. 30 is a timing chart illustrating one example of control according to the sixth exemplary embodiment;
FIG. 31 is a timing chart illustrating another example of control according to the sixth exemplary embodiment;
FIG. 32 is a timing chart illustrating another example of control according to the sixth exemplary embodiment;
FIG. 33 is a timing chart illustrating another example of control according to the sixth exemplary embodiment;
FIG. 34 is a block diagram schematically illustrating a vehicle control apparatus according to a seventh exemplary embodiment of the invention;
FIGS. 35A and 35B are views illustrating a driving state of the clutch pedal and the clutch when an electromagnetic retainer driving portion is off;
FIGS. 36A and 36B are views illustrating a driving state of the clutch pedal and the clutch when the electromagnetic retainer driving portion is on;
FIG. 37 is a block diagram schematically showing a vehicle control apparatus according to an eighth exemplary embodiment of the invention;
FIGS. 38A and 38B are views illustrating a driving state of the clutch pedal and the clutch when a released-state maintaining portion is off;
FIGS. 39A and 39B are views illustrating a driving state of the clutch pedal and the clutch when the released-state maintaining portion is on; and
FIG. 40 is a flowchart illustrating a reflection switching control routine executed by a reflection switching control ECU.

### DETAILED DESCRIPTION OF THE PREFERRED EMBODIMENTS

Hereinafter, a vehicle control apparatus according to a first exemplary embodiment of the invention will be described.

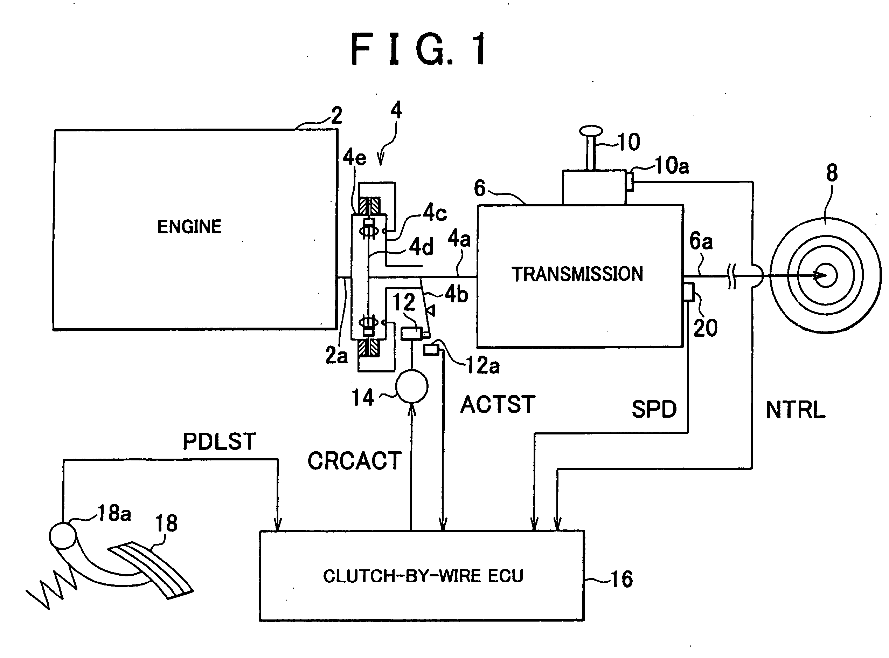

FIG. 1 is a block diagram schematically illustrating a vehicle control apparatus to which the invention has been applied. Torque output from an internal combustion engine (hereinafter, simply referred to as "engine") 2 mounted in a vehicle is transmitted via a crankshaft 2a to a clutch 4. This clutch 4 has an output shaft 4a which is connected to a transmission 6. Rotation of the output shaft 4a is changed by the transmission 6 and output to driven wheels 8 from an output shaft 6a via a propeller shaft and differential gear and the like. The transmission 6 is a manual gear transmission capable of achieving a desired gear ratio by changing the combination of gears that are engaged in the transmission 6 according to an operation of a shift lever 10.

In this exemplary embodiment, the clutch 4 is a dry-operating single disc friction clutch. The clutch 4 can disconnect the transmission 6 from the engine so that torque is not transmitted to the transmission 6. In this case, a clutch release fork 4b is turned to a release position (i.e., a release operation), which bends a diaphragm spring 4c so as to take pressure off of a clutch disc 4d such that the clutch disc 4d moves away from a flywheel 4e, thereby effectively disconnecting the transmission 6 from the engine. The clutch 4 can also connect the transmission 6 to the engine so that torque is transmitted to the transmission 6. In this case, the clutch release fork 4b is returned to an applied position (i.e., an apply operation) such that pressure is applied to the clutch disc 4d by the diaphragm spring 4c. This pressure in turn causes the clutch disc 4d to press against the flywheel 4e, thereby effectively connecting the transmission 6 to the engine. These release and application operations of the clutch 4 using the clutch release fork 4b are carried out by a clutch actuator 12.

This clutch actuator 12 is driven by an actuator driving source such as an electric motor or a hydraulic pressure control circuit or the like (in this exemplary embodiment the driving source is a electric motor 14). The driving amount of this electric motor 14 is controlled by a clutch-by-wire ECU (electronic control unit) 16. Application and release of the clutch 4 are controlled by adjusting the amount that the clutch actuator 12 turns the clutch release fork 4b by adjusting the driving amount of the electric motor 14, which drives the clutch actuator 12, with the clutch-by-wire ECU 16.

The clutch-by-wire ECU 16 is constructed as an electronic control circuit, the main component of which is a microcomputer that includes ROM, RAM, an interface circuit, and a driver circuit. The clutch-by-wire ECU 16 inputs signals from an actuator stroke sensor 12a that detects an actuator stroke amount ACTST of the clutch actuator 12 and signals from an operation stroke sensor 18a that detects an operation stroke amount PDLST of a clutch pedal 18 operated by a driver. The clutch-by-wire ECU 16 also inputs signals from a vehicle speed sensor 20 that detects a vehicle speed SPD by the rotation of the output shaft 6a of the transmission 6 and signals from a neutral switch 10a that detects whether the shift lever 10 is being shifted to a neutral position NTRL.

Based on these signals, the clutch-by-wire ECU 16 first performs a calculation routine according to a program written in the ROM, and then outputs a driving signal CRCACT to the electric motor 14 so as to apply or release the clutch 4 using with the clutch actuator 12.

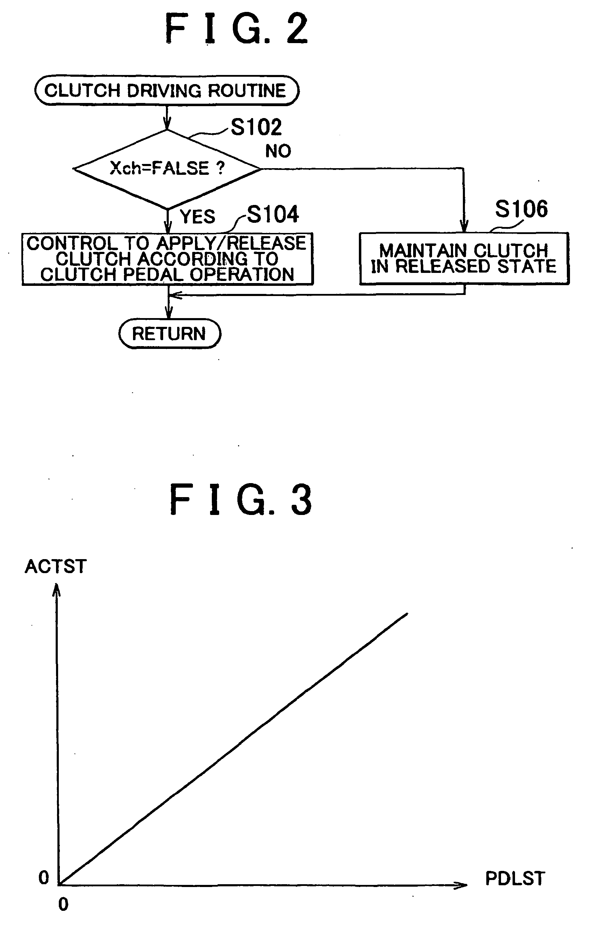

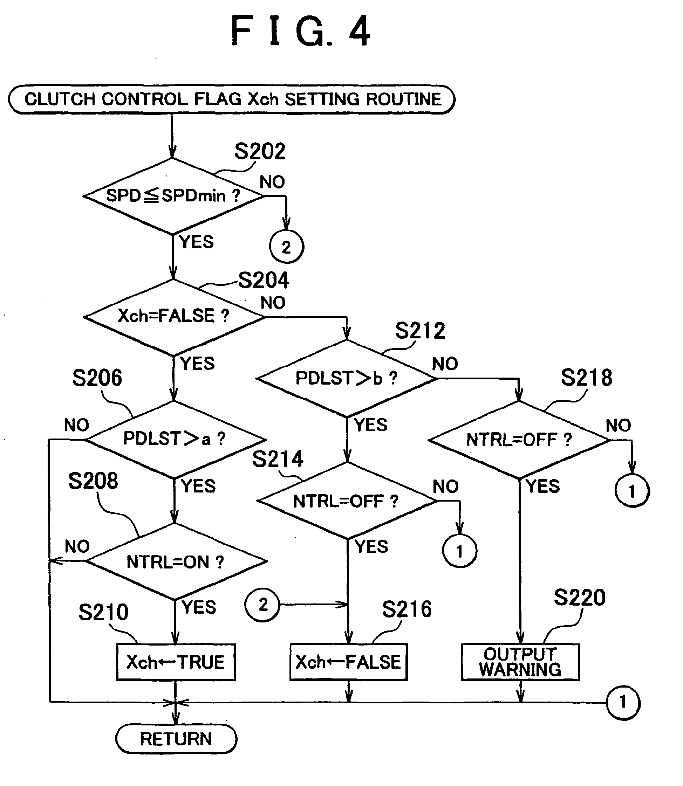

FIG. 2 shows a clutch driving routine executed by the clutch-by-wire ECU 16. The routine is repeatedly executed at short-interval cycles. At the beginning of the routine, it is first determined whether a clutch control flag Xch is "0" (step S102). This clutch control flag Xch is a flag that is set in a clutch control flag Xch setting routine (FIG. 4), which will be described later.

If the clutch control flag Xch is "0" (i.e., "YES" in step S 102), control is executed to release or apply the clutch 4 according to the operation of the clutch pedal 18 (step S104). That is, the clutch-by-wire ECU 16 reads the operation stroke amount PDLST indicative of a depression amount of the clutch pedal 18 detected by the operation stroke sensor 18a, and then outputs the driving signal CRCACT to the electric motor 14 so that the actuator stroke amount ACTST changes according to the operation stroke amount PDLST, as shown in FIG. 3. As a result, when the driver depresses the clutch pedal 18, the clutch actuator 12 turns the clutch release fork 4b counterclockwise in FIG. 1. This action reduces the pressure applied by the diaphragm spring 4c on the clutch disc 4d so that the clutch disc 4d ultimately comes away from the flywheel 4e, thereby releasing the clutch 4. Conversely, when the driver releases the clutch pedal 18, the clutch actuator 12 turns the clutch release fork 4b clockwise in FIG. 1. This action reapplies pressure by the diaphragm spring 4c to the clutch disc 4d so that the clutch disc 4d ultimately presses against the flywheel 4e, thereby applying the clutch 4.

On the other hand, if the clutch control flag Xch is "1" (i.e., "NO" in step S 102), the clutch 4 is maintained in a released state irrespective of the operating state of the clutch pedal 18 (step S 106). That is, the clutch-by-wire ECU 16 continues to output the driving signal CRCACT to the electric motor 14 so that the maximum actuator stroke amount ACTST is achieved.

Next, the clutch control flag Xch setting routine (FIG. 4) will be described. This routine is repeatedly executed with the same cycle as, but just before, the clutch driving routine (FIG. 2). At the beginning of the routine, it is first determined whether the vehicle speed SPD is equal to, or less than, a threshold value SPmin (step S202). This threshold value SPmin is a threshold for determining whether the vehicle has substantially stopped, and is set at 0 (km/h) or a value therearound.

If SPD > SPDmin while the vehicle is being driven (i.e., "NO" in step S202), the clutch control flag Xch is set to "0" (step S216) and the routine ends. As a result, the clutch 4 is released or applied according to an operation of the clutch pedal 18 by executing step S 104 in the clutch driving routine (FIG. 2).

On the other hand, when SPD ≤ SPDmin (i.e., "YES" in step S202), it is then determined whether the clutch control flag Xch is "0" (step S204). If Xch is "0" (i.e., "YES" in step S204), it is then determined whether the operation stroke amount PDLST is greater than a threshold value a (step S206). This threshold value a is a determination value for estimating that the driver is performing a release operation of the clutch 4 by depressing the clutch pedal 18 when the clutch 4 is being controlled to be applied or released according to an operation of the clutch pedal 18.

When PDLST ≤ a (i.e., "NO" in step S206), it is estimated that the driver is not performing a clutch release operation so the routine ends. As a result, Xch = "0" is maintained.

When PDLST > a (i.e., "YES" in step S206), however, it is then determined whether the neutral position NTRL signal from the neutral switch 10a is "ON" (step S208). Because NTRL = "OFF" when the shift lever 10 is not in the neutral position (i.e., "NO" in step S208), the routine ends as it is. As a result, Xch = "0" is maintained.

When PDLST > a (i.e., "YES" in step S206) and NTRL = "ON", (i.e., "YES" in step S208), it can be determined that the driver is performing an operation to release the clutch 4 and the transmission 6 has been put into a neutral state. Accordingly, the clutch control flag Xch is set to "1" (step S210) and the routine ends.

When Xch = "1", the determination in step S102 in the clutch driving routine (FIG. 2) is "NO" and the clutch 4 is maintained in the released state regardless of operation of the clutch pedal 18 (step S 106).

In the next control cycle, after the determination in step S202 is "YES", Xch = "1" so the determination in step S204 is "NO" and it is determined whether the operation stroke amount PDLST is larger than a threshold value b (step S212). This threshold value b is set to a value that is smaller than the threshold value a. Because PDLST > b (i.e., "YES" in step S212) initially when Xch = "1" due to the fact that the vehicle is stopped, such as when waiting at a stoplight, it is next determined whether NTRL = "OFF" (step S214). Because the shift lever 10 is in the neutral position and NTRL = "ON" (i.e., "NO" in step S214) at this time, the routine ends. As a result, Xch = "1" is maintained such that the clutch 4 is maintained in the released state.

After shifting the shift lever 10 into the neutral position, the driver then releases the depressed clutch pedal 18. Therefore, because the operation stroke amount PDLST becomes equal to, or less than, b (i.e., "NO" in step S212), it is next determined whether NTRL = "OFF" (step S218). Because NTRL = "ON" (i.e., "NO" in step S218) at this time, the routine ends.

Accordingly, Xch = "1" is maintained and the clutch 4 is kept in the released state. That is, even if the clutch pedal 18 is completely released, the clutch-by-wire ECU 16 does not reflect that operation of the clutch pedal 18 in the clutch actuator 12 so torque from the engine 2 is not transmitted to the transmission 6. As a result, the generation of rattling as the vehicle is stopping is able to be prevented without the driver having to apply operating force (i.e., pressure) to the clutch pedal 18.

When the driver depresses the clutch pedal 18 in order to start driving the vehicle, PDLST > b (i.e., "YES" in step S212) so it is then determined whether NTRL = "OFF" (step S214). Because the shift lever 10 is still in the neutral position and NTRL = "ON" (i.e., "NO" in step S214) at this time, the routine ends at this point. Accordingly, Xch = "1" is maintained at this stage.

Then when the driver shifts the shift lever 10 from the neutral position into a position for driving the vehicle, or more specifically, when the driver shifts the shift lever 10 into the first speed position or the reverse position, NTRL = "OFF" (i.e., "YES" in step S214) and the clutch control flag Xch is set to "0" (step S216). As a result, in the clutch driving routine (FIG. 2), the determination in step S102 is "YES" and the process (step S104) is performed to reflect the operation of the clutch pedal 18 in the clutch actuator 12. Because the clutch pedal 18 is depressed at this time, the clutch 4 is maintained in the released state.

During the next control cycle, because the determination in step S202 is "YES" and Xch = "0" once again (i.e., "YES" in step S204), it is then determined whether PDLST > a (step S206). In this case, because the driver depresses the clutch pedal 18 until PDLST > a (i.e., "YES" in step S206), it is next determined whether NTRL = "ON" (step S208). Because NTRL = "OFF" (i.e., "NO" in step S208) at this time, the routine ends at this point. Accordingly, Xch = "0" is maintained but because the clutch pedal 18 is being depressed, the clutch 4 is maintained in the released state.

When the driver releases the clutch pedal 18 in order to transmit torque from the engine 2 to the driven wheels 8, PDLST ≤ a (i.e., "NO" in step S206) so the routine ends at this point.

As a result, because the clutch control flag Xch continues to be "0", the clutch 4 reflects the operation of the clutch pedal 18 and is applied. Accordingly, torque is transmitted from the engine 2 to the driven wheels 8 via the clutch 4 and the transmission 6, such that the vehicle takes off.

Now let us consider a case in which the driver applies force to the shift lever 10 for some reason when the clutch pedal 18 has been completely released, the shift lever 10 is in the neutral position and the vehicle is stopped (i.e., "YES" in step S202, "NO" in step S204, "NO" in step S212, and "NO" in step S218). In this case, because the clutch pedal 18 has been completely released but the clutch control flag Xch is actually still "1", the clutch 4 is in a released state so torque is not transmitted from the engine 2 to the transmission 6. Therefore, the shift lever 10 can be shifted from the neutral position into a driving position. In a case where the driver attempts to shift the shift lever 10 from the neutral position into a driving position in this way, NTRL changes to "OFF" (i.e., "YES" in step S218). Accordingly, a warning process (step S220) is executed which outputs a warning sound or voice warning from a buzzer or a speaker or the like provided in the dashboard. As a result, the driver can be made aware of the fact that he or she is attempting to shift the shift lever 10 into a driving position while operation of the clutch pedal 18 is not being reflected in the clutch 4, so an unpleasant sensation is not imparted to the driver. Then when the driver responds to the warning and returns the shift lever 10 to the neutral position, the determination in step S218 changes back to "NO" and output of the warning can be stopped.

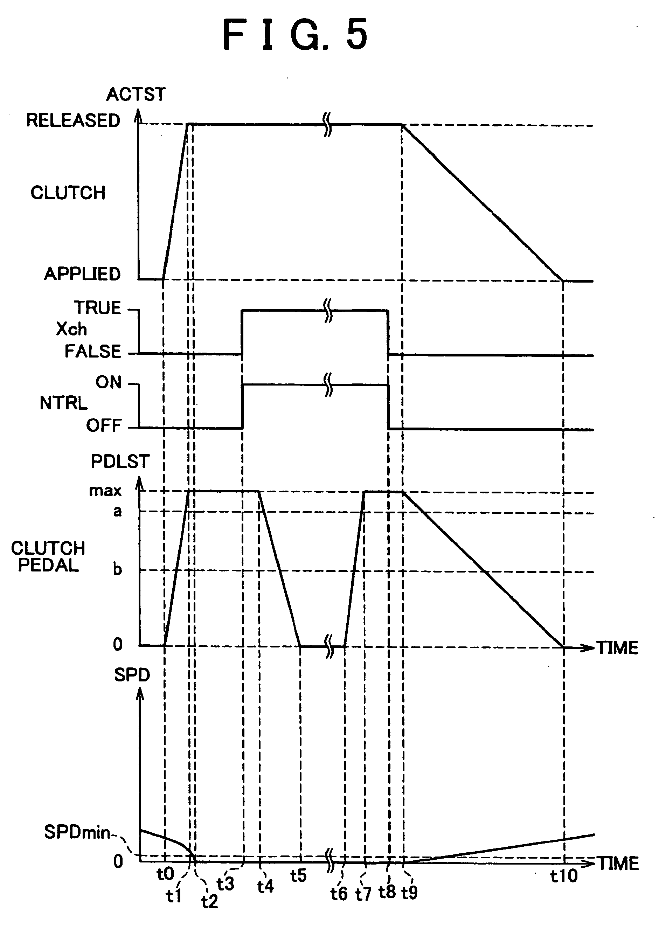

FIGS. 5 to 8 are timing charts which show examples of control according to the exemplary embodiment. FIG. 5 shows an example in which the driver depresses the clutch pedal 18 to release the clutch 4, shifts the shift lever 10 into the neutral position, and then releases the clutch pedal 18 when the vehicle is stopped, such as when waiting at a stoplight. First, while the vehicle speed SPD is gradually being reduced by braking, the driver depresses the clutch pedal 18 (time t0 to time t1). During this operation, the operation stroke amount PDLST becomes greater than a. However, because the vehicle is running (i.e., "NO" in step S202) and Xch = "0" (step S216) at this time, release or application control (step S104 in FIG. 2) is executed. Accordingly, the clutch 4 reflects the operation of the clutch pedal 18 and releases.

Then, the vehicle speed SPD decreases below the threshold value SPDmin, which is approximately 0 (km/h) (i.e., "YES" in step S202 at time t2) and the shift lever 10 is shifted into the neutral position (i.e., NTRL = "ON") by an operation by the driver (i.e., "YES" in step S208 at time t3). Accordingly, the clutch control flag Xch changes from "0" to "1" (step S210). As a result, the clutch 4 is maintained in the released state irrespective of an operation of the clutch pedal 18 (step S 106 in FIG. 2).

Then the driver completely releases the clutch pedal 18 (time t4 to time t5), but because the clutch control flag Xch is already "1", the clutch 4 is maintained in the released state and does not reflect the operation of the clutch pedal 18. Therefore, the clutch 4 is able to be maintained in the released state without the driver having to apply operating force to operate the clutch pedal 18, and rattling is not generated.

Then while the driver is depressing the clutch pedal 18 to start driving the vehicle (time t6 to time t7), the operation stroke amount PDLST becomes greater than b (i.e., "YES" in step S212). At this time, however, because the NTRL = "ON" (i.e., "NO" in step S214), Xch = "1" is maintained such that the clutch 4 continues to remain in the released state.

Shifting the shift lever 10 into a driving position results in NTRL = "OFF" (i.e., "YES" in step S214 at time t8) such that the clutch control flag Xch returns to "0" (step S216). As a result, the clutch 4 reflects the operation of the clutch pedal 18 thereafter. Accordingly, the clutch 4 is applied as the operation stroke amount PDLST decreases (time t9 to time t10). During this time the vehicle starts to be driven.

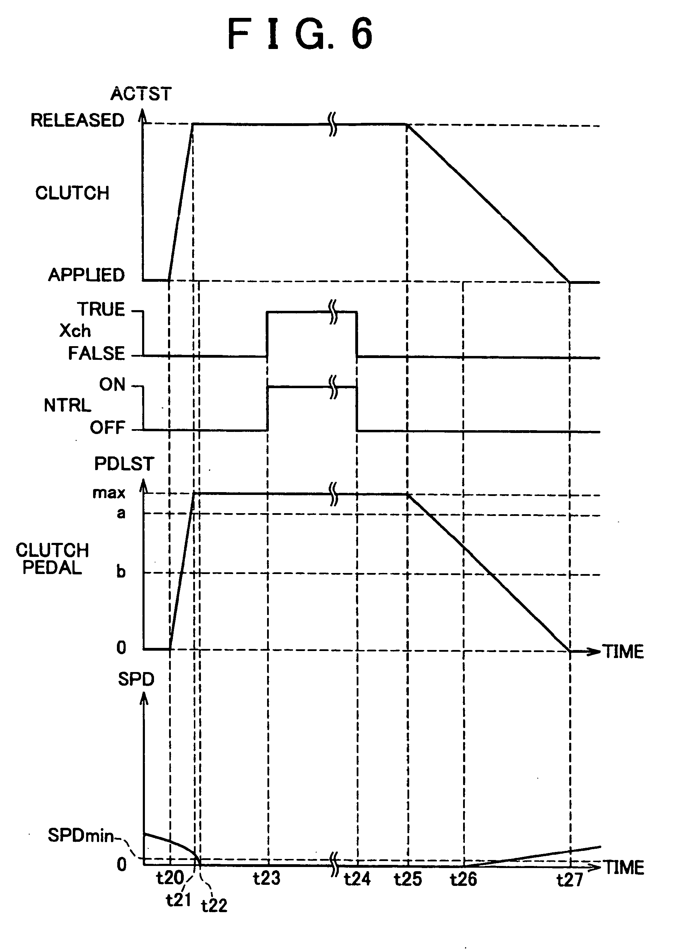

FIG. 6 shows an example in which the driver continues to depress the clutch pedal 18. Time t20 to time t22 in this drawing progresses the same as time t0 to time t2 in FIG. 5. After the vehicle has completely stopped, the driver shifts the shift lever 10 from the second speed position into neutral (time t23) and then into the first speed position all while continuing to depress the clutch pedal 18 (time t24). During this period in which NTRL = "ON", Xch = "1" and operation of the clutch pedal 18 is not reflected in the clutch 4. Also, by shifting the shift lever 10 into the first speed position, the clutch control flag Xch changes from "1" to "0" (step S216).

Then the driver releases the clutch pedal 18 to start driving (time t25 to time t27). Because Xch = "0" at this time, the clutch 4 reflects operation of the clutch pedal 18, and thus changes from being in a released state to an applied state. During this time the vehicle starts to run (time t26).

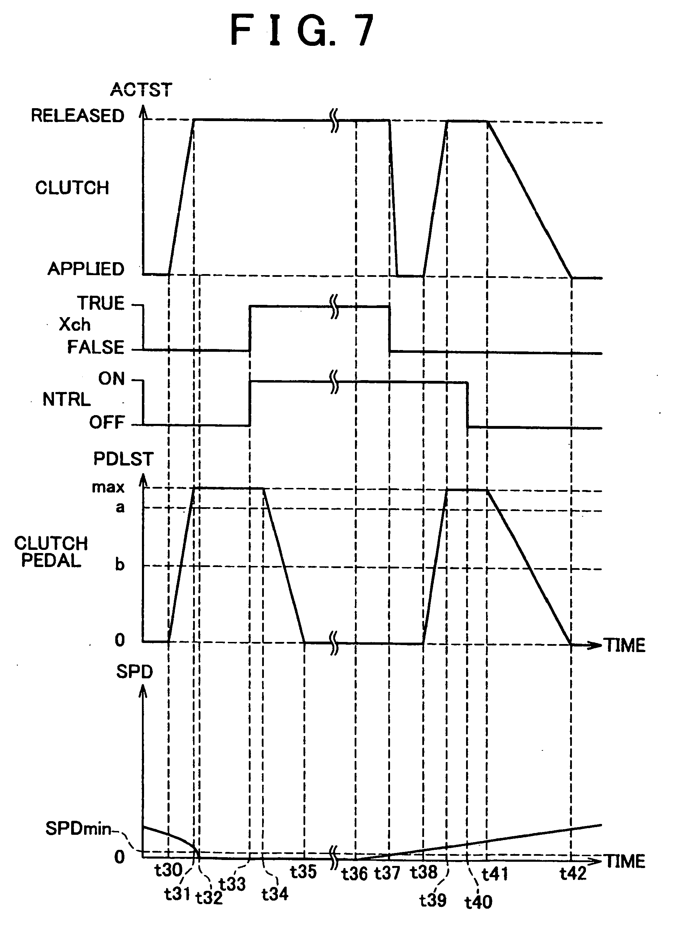

FIG. 7 illustrates a case in which the vehicle is started from a standstill on a downward slope. Time t30 to time t35 in the drawing progresses the same as time t0 to time t5 in FIG. 5. When the driver releases the brake pedal to drive the vehicle, the vehicle starts to run downhill due to gravitational force. (time t36). When the vehicle speed SPD exceeds the threshold value SPDmin (i.e., "NO" in step S202 at time t37), clutch control flag Xch becomes "0" (step S216).

As a result, the clutch 4 is applied so as to reflect the state of the clutch pedal 18 which has already been released. Then the driver releases the clutch 4 by depressing the clutch pedal 18 (time t38 to time t39) and shifts the shift lever 10 into the first speed position (time t40). The clutch 4 is then applied again by releasing the clutch pedal 18 (time t41 to time t42).

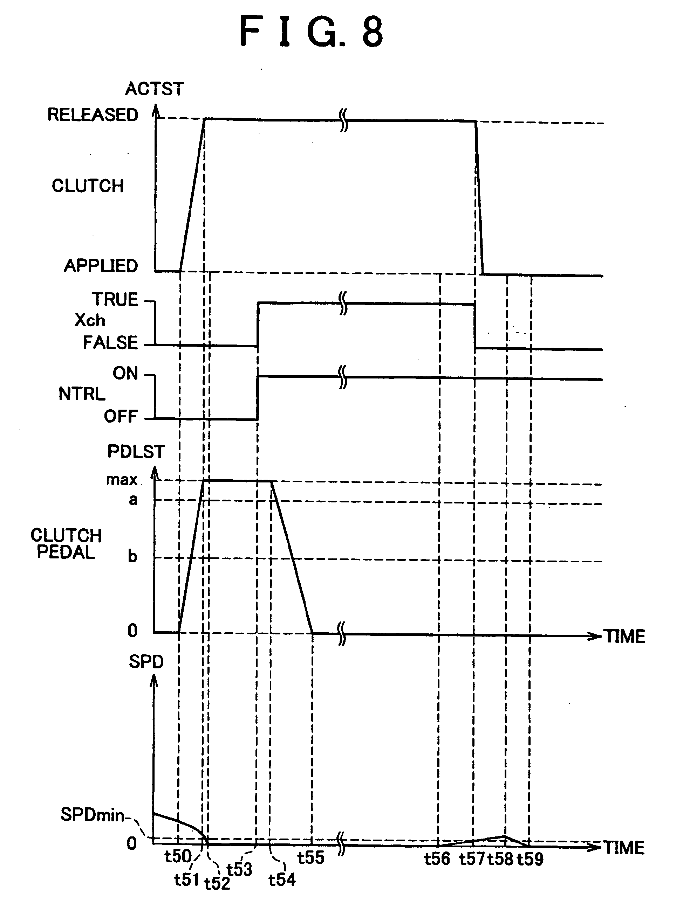

FIG. 8 illustrates a case in which the vehicle which started to run on a downward slope is stopped again by braking. Time t50 to time t55 in the drawing progresses the same as time t0 to time t5 in FIG. 5. When the vehicle starts to run forward from a stopped state due to the brake being released (time t56) and the vehicle speed SPD exceeds the threshold value SPDmin. (i.e., "NO" in step S202 at time t57), the clutch control flag Xch is set to "0" (step S216). Therefore, the clutch 4 is applied so as to reflect the state of the clutch pedal 18 which has already been released. Then when the driver realizes that the vehicle is starting to run, he or she can stop the vehicle by depressing the brake pedal (time t58 to time t59).

In the foregoing construction, the engine 2 corresponds to the driving source for running the vehicle, the clutch pedal 18 corresponds to the clutch operating portion, the shift lever 10 corresponds to the shift instructing portion, the vehicle speed sensor 20 corresponds to the vehicle stopped state detecting means, the neutral switch 10a corresponds to the shift instruction detecting means, and the operation stroke sensor 18a corresponds to the clutch operation detecting means. Step S204 of the clutch driving routine (FIG. 2) executed by the clutch-by-wire ECU 16 using the operation stroke sensor 18a, the electric motor 14, the clutch actuator 12, and the actuator stroke sensor 12a corresponds to the process of clutch pedal reflecting means. Step S106 of the clutch driving routine (FIG. 2) executed by the clutch-by-wire ECU 16 using the electric motor 14, the clutch actuator 12, and the actuator stroke sensor 12a, as well as the clutch control flag Xch setting routine (FIG. 4) correspond to processes of the clutch-released maintaining means and the warning means.

Hereinafter, effects obtained from the first exemplary embodiment will be described.
a) In the clutch control flag Xch setting routine (FIG. 4), when conditions for not reflecting operation of the clutch pedal 18 in the clutch 4 (i.e., "YES" in step S202, "YES" in step S206, and "YES" in step S208) are fulfilled, a process is performed to maintain the clutch 4 in the released state irrespective of the operating state of the clutch pedal 18 (step S106 in FIG. 2). This process for maintaining the clutch released state (step S106) is continued thereafter until conditions for reflecting operation of the clutch pedal 18 in the clutch 4 (i.e., "YES" in step S212 and "YES" in step S214, or "NO" in step S202) are fulfilled.

Therefore, after the vehicle is stopped and the shift lever 10 is shifted into neutral after the driver has performed an operation to release the clutch 4, even if an operation is performed to apply the clutch 4, the clutch-by-wire ECU 16 actually maintains the clutch 4 in the released state and does not reflect that operation of the clutch pedal 18 in the clutch 4. As a result, torque is not transmitted from the engine 2 to the transmission 6 so rattling can be prevented.

Then, because the vehicle is stopped at this time and the driver is shifting the shift lever 10 into neutral (i.e., a non-driving shift), even if the operation of the clutch pedal 18 is not reflected in the clutch 4 and the clutch 4 is maintained in the released state, a sense of unpleasantness will not be imparted to the driver.

In this way, it is possible to prevent rattling without giving the driver a sense of unpleasantness in a vehicle provided with the clutch pedal 18.
b) When the driver performs an operation to release the clutch 4 using the clutch pedal 18 (i.e., "YES" in step S212 in FIG. 4) and the shift lever 10 is shifted from the neutral position into a driving position (i.e., "YES" in step S214), it can be estimated that the driver is attempting to drive the vehicle again. Accordingly, by executing the reflecting process of step S 104 in FIG. 2 again from this time, the clutch 4 actually reflects the operation of the clutch pedal 18 so as to become applied when the driver performs an operation to apply the clutch 4 with the clutch pedal 18 thereafter, so a feeling of unpleasantness is not imparted to the driver.
c) If the driver releases the brake on a downward slope or the like such that the vehicle starts to run, it is estimated that the driver is attempting to drive the vehicle again. Accordingly, if SPD > SPDmin (i.e., "NO" in step S202), the clutch control flag Xch is "0" (step S216) and the reflecting process of step S104 in FIG. 2 is executed again from this time. As a result, when the driver performs an operation to apply the clutch 4 using the clutch pedal 18 thereafter, the clutch 4 reflects operation of the clutch pedal 18 and therefore is actually applied so the driver does not feel a sense of unpleasantness.

Even if the vehicle starts running when the driver has no intention of driving the vehicle when the clutch pedal 18 is released on a slope (i.e., "NO" in step S202), Xch = "0" (step S216). As a result, the clutch 4 changes from being in a released stated to an applied state. Because the clutch 4 returns to a state in which it can be operated by the driver, the driver feels no sense of unpleasantness.
d) If the driver attempts to shift the shift lever 10 into a position other than the neutral position while operation of the clutch pedal 18 is not reflected in the clutch 4 (i.e., "YES" in step S218 in FIG. 4), a warning is issued to the driver (step S220). As a result, the driver is made aware of the fact that the reason the shift lever 10 can be shifted into a driving position while an operation to apply the clutch 4 with the clutch pedal 18 is being performed is because operation of the clutch pedal 18 is not reflected in the clutch 4. Further, the driver feels no sense of unpleasantness and safety is able to be increased.
e) In the foregoing exemplary embodiment, the clutch pedal 18 and the clutch 4 are electrically connected. That is, the operation stroke sensor 18a electrically detects operation of the clutch pedal 18 and the clutch-by-wire ECU 16 outputs a command electrically to the electric motor 14 to drive the clutch 4 via the clutch actuator 12.

By electrically connecting the clutch pedal 18 and the clutch 4 in this way, the clutch 4 can be made to reflect or not reflect operation of the clutch pedal 18 with a relatively simple construction.
f) In the foregoing exemplary embodiment, by combining the clutch pedal 18 and the operation stroke sensor 18a, the clutch 4 is released when the driver applies operating force to the clutch pedal 18 and is applied when the driver does not apply operating force to the clutch pedal 18. According to this type of construction, in order to reduce work the driver does not need to apply operating force to the clutch pedal 18, particularly when the vehicle is stopped, such as when waiting at a stoplight. However, because operation is not reflected in the clutch 4 at this time, it is possible to prevent rattling while reducing the amount of work required by the driver.

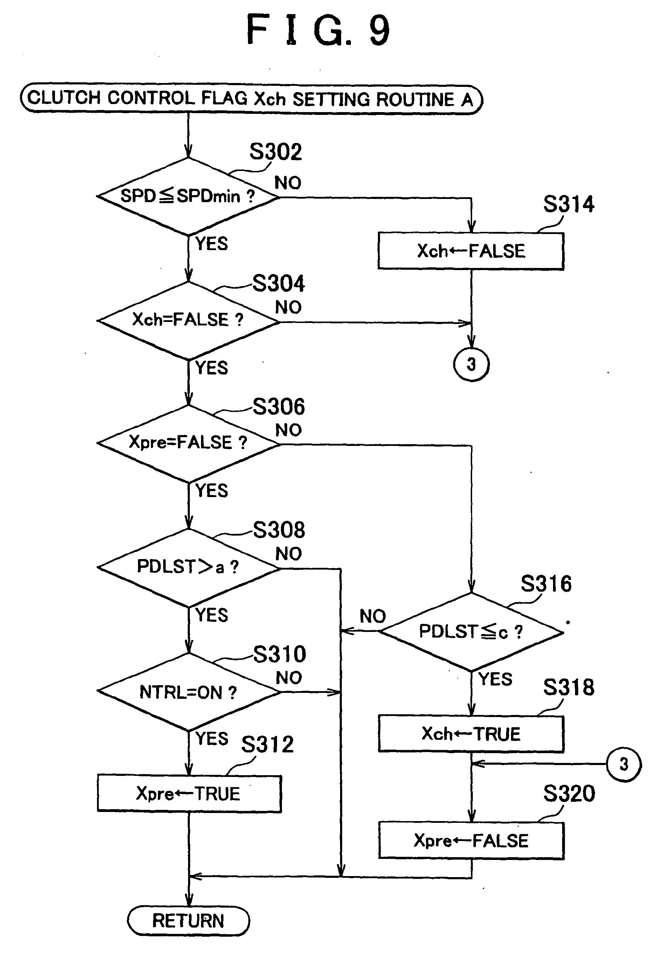

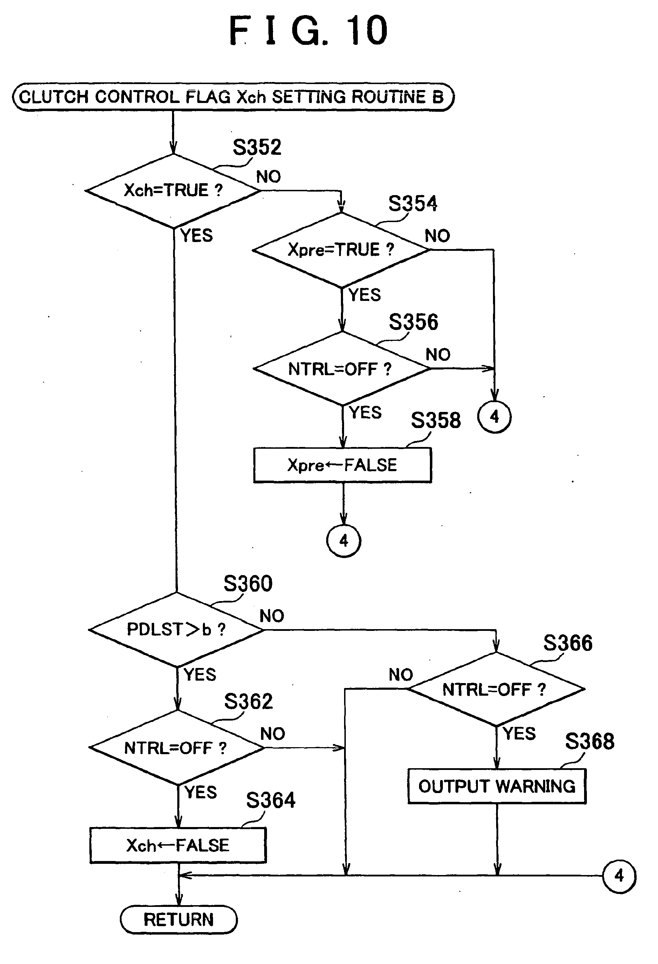

Next, a vehicle control apparatus according to a second exemplary embodiment of the invention will be described.
In this exemplary embodiment a clutch control flag Xch setting routine A shown in FIG. 9 and a clutch control flag Xch setting routine B shown in FIG. 10, instead of the clutch control flag Xch setting routine of the first exemplary embodiment shown in FIG. 4, are executed with the same cycle. Aside from this, the construction is the same as that in the first exemplary embodiment. The clutch control flag Xch setting routine B (FIG. 10) is executed after the clutch control flag Xch setting routine A (FIG. 9).

When the clutch control flag Xch setting routine A (FIG. 9) starts, it is first determined whether the vehicle is stopped (i.e., SPD ≤ SPDmin) (step S302).
If SPD > SPDmin (i.e., "NO" in step S302), then the clutch control flag Xch is set to "0" (step S314) and a prerequisite flag Xpre is set to "0" (step S320), after which the routine ends.

On the other hand, if SPD ≤ SPDmin (i.e., "YES" in step S302), then it is determined whether Xch = "0" (step S304). If Xch = "0" (i.e., "YES" in step S304), then it is determined whether Xpre = "0" (step S306). If Xpre = "0" (i.e., "YES" in step S306), then it is determined whether the operation stroke amount PDLST is greater than the threshold value a (step S308). The threshold value a is a determination value used to estimate whether the driver has performed an operation to release the clutch 4 with the clutch pedal 18, as described in step S206 in FIG. 4.

If PDLST ≤ a (i.e., "NO" in step S308), it is estimated that the driver has not performed an operation to release the clutch 4 and the routine ends at that point. If PDLST > a (i.e., "YES" in step S308), it is next determined whether the neutral position NTRL signal from the neutral switch 10a is "ON" (step S310). If the shift lever 10 is not in the neutral position, NTRL = "OFF" (i.e., "NO" in step S310) and the routine ends at this point.

If PDLST > a (i.e., "YES" in step S308) and NTRL = "ON" (i.e., "YES" in step S310), it can be determined that the driver is performing an operation to release the clutch 4 and the transmission is a neutral state, so the prerequisite flag Xpre is set to "1" (step S312) and the routine ends.

In the next control cycle, after the determination in step S302 is "YES", the determination in step S304 is "YES" because the clutch control flag Xch is still "0" so it is next determined whether Xpre = "0" (step S306). Because the prerequisite flag Xpre was "1" in the last control cycle (i.e., "NO" in step S306), it is then determined whether the operation stroke amount PDLST is equal to, or less than, a threshold value c (step S316). This threshold value c is a determination value used to estimate that the driver has released the clutch pedal 18 in order to apply the clutch 4 while release or application control of the clutch 4 (step S 104 in FIG. 2) that corresponds with the operation of the clutch pedal 18 was being executed. The relationship between threshold value c and threshold value a is such that threshold value c is less than the threshold value a.

When the driver continues to depress the clutch pedal 18, PDLST > c (i.e., "NO" in step S316) so the routine ends. Accordingly, Xpre = "1", but because the clutch control flag Xch continues to be "0", the process which reflects operation of the clutch pedal 18 in the clutch 4 in the release/application control (FIG. 2) is continued (step S 104).

Thereafter, while SPD ≤ SPDmin and NTRL = "ON", the determination in step S316 continues to be "NO" such that the state in which Xch = "0" is continued as long as the driver continues to depress the clutch pedal 18.

When the driver releases the clutch pedal 18, PDLST becomes equal to, or less than, c (i.e., "YES" in step S316) so it can be determined that the driver has put the transmission 6 in neutral and is performing an operation to apply the clutch 4. Therefore, the clutch control flag Xch is set to "1" (step S318) and the prerequisite flag Xpre is set to "0" (step S320), after which the routine ends.

In this way, by setting the clutch control flag Xch to "1", the determination in step S102 in the clutch driving routine (FIG. 2) is "NO" and the clutch 4 is set so as to be maintained in the released state (step S106).

In the next control cycle, after the determination in step S302 is "YES", Xch = "1" so the determination in step S304 is "NO". The prerequisite flag Xpre is then set to "0" (step S320) and the routine ends.

This state is maintained until either SPD > SPDmin (i.e., "NO" in step S302) and the clutch control flag Xch is set to "0" (step S314), or the clutch control flag Xch is set to "0" in the clutch control flag Xch setting routine B (FIG. 10) to be described next.

The clutch control flag Xch setting routine B (FIG. 10) will now be described. When this routine starts, it is first determined whether the clutch control flag Xch is "1" (step S352). If Xch = "0" (i.e., "NO" in step S352), it is then determined whether the prerequisite flag Xpre is "1" (step S354). If Xpre = "0" (i.e., "NO" in step S354), the routine ends at this point.

On the other hand, if Xch = "0" (i.e., "NO" in step S352) and Xpre = "1" (i.e., "YES" in step S354), it is then determined whether NTRL = "OFF" (step S356). That is, when the prerequisite flag Xpre is set to "1" in the clutch control flag Xch setting routine A (FIG. 9), it is determined whether the shift lever 10 has been shifted into a position other than neutral.

If NTRL = "ON" (i.e., "NO" in step S356), the routine ends at this point. When NTRL = "OFF" when Xpre = "1" (i.e., "YES" in step S356), the prerequisite flag Xpre is set to "0" (step S358) and the routine ends at this point. That is, both the clutch control flag Xch and the prerequisite flag Xpre are reset to "0".

When the clutch control flag Xch is set to "1" by executing step S318 in the clutch control flag Xch setting routine A (FIG. 9) (i.e., "YES" in step S352), it is next determined whether the operation stroke amount PDLST is greater than a threshold value b (step S360). Because the threshold value b is set to a value that greater than the threshold value c (threshold value b may also be equal to, or less than, threshold c), PDLST < b immediately after PDLST ≤ c due to the clutch pedal 18 being released (i.e., "NO" in step S360), so it is next determined whether NTRL = "OFF" (step S366). Because the shift lever 10 is in the neutral position and NTRL = "ON" (i.e., "NO" in step S366), the routine ends at this point. Accordingly, Xch = "1" is maintained and the clutch 4 continues to be maintained in a released state (step S 106 in FIG. 2) in the clutch driving routine (FIG. 2). When b < c or b = c, even if the determination in step S360 is temporarily "YES" because of that fact, it is next determined whether NTRL = "OFF" (step S362). Because NTRL = "ON" (i.e., "NO" in step S362) the routine ends so in this case as well, Xch = "1" is maintained.

Therefore, although the clutch pedal 18 has been completely released, the clutch 4 does not reflect the operation of the clutch pedal 18 and is kept in the released state. Thereafter, if the vehicle is stopped without the driver operating either the shift lever 10 or the clutch pedal 18, the determination in step S352 continues to be "YES", the determination in step S360 continues to be "NO", and the determination in step S366 continues to be "NO" in the clutch control flag Xch setting routine B (FIG. 10) when the routine is repeated. Therefore, Xch = "1" is maintained and the clutch 4 is kept in the released state. Also, in the clutch control flag Xch setting routine A (FIG. 9), the determination is "YES" in step S302 and "NO" in step S304, and the process for executing step S320 is repeatedly performed.

Accordingly, because the clutch 4 is not applied even if the driver does not apply operating force to the clutch pedal 18, the torque of the engine 2 is not transmitted to the transmission 6 so rattling is prevented from being generated while the vehicle is stopped.

When the driver depresses the clutch pedal 18 in order to start running the vehicle, the operation stroke amount PDLST becomes greater than b (i.e., "YES" in step S360 in FIG. 10), so it is next determined whether NTRL = "OFF" (step S362). Because the shift lever 10 is still in the neutral position and NTRL = "ON" at this time (i.e., "NO" in step S362), the routine ends at this point. Therefore, Xch = "1" is maintained at this stage.

Then when the driver shifts the shift lever 10 from the neutral position into a position for driving the vehicle, or more specifically, when the driver shifts the shift lever 10 into the first speed position or the reverse position, while fully depressing the clutch pedal 18, NTRL = "OFF" (i.e., "YES" in step S362) and the clutch control flag Xch is reset to "0" (step S364). As a result, the process (step S104 in FIG. 2) in the clutch driving routine (FIG. 2) is performed to reflect the operation of the clutch pedal 18 in the clutch actuator 12. Because the clutch pedal 18 is depressed at this time, the clutch 4 is maintained in the released state since it reflects that operation.

Because Xch = "0" the determination in step S304 in the clutch control flag Xch setting routine A (FIG. 9) is "YES" and because Xpre = "0" (i.e., "YES" in step S306), it is next determined whether PDLST > a (step S308). Because the clutch pedal 18 is being depressed at this time, PDLST > a (i.e., "YES" in step S308) and it is then determined whether NTRL = "ON" (step S310). However, because NTRL = "OFF" (i.e., "NO" in step S310), the clutch control flag Xch setting routine A (FIG. 9) ends at this point. Accordingly, Xpre = "0" is maintained.

Further, by the driver thereafter performing an operation to apply the clutch 4 with the clutch pedal 18, even if operation stroke amount PDLST becomes less than, or equal to, a (i.e., "NO" in step S308), Xpre = "0" is maintained. Therefore, the determination in step S306 will not be "NO".

Also, in the clutch control flag Xch setting routine B (FIG. 10), Xch = "0" (i.e., "NO" in step S352) and Xpre = "0" (i.e., "NO" in step S354), so the process for ending the clutch control flag Xch setting routine B (FIG. 10) at that point continues.

Accordingly, Xch = "0" is maintained thereafter. Therefore, the process of step S 104 in the clutch driving routine (FIG. 2) continues to be executed and the clutch 4 is made to reflect a release operation of the clutch pedal 18 and is thus applied. As a result, torque from the engine 2 is transmitted to the driven wheels 8 via the clutch 4 and the transmission 6 such that the vehicle takes off.

Now let us consider a case in which the driver applies force to the shift lever 10 for some reason when the shift lever 10 is shifted into the neutral position, the clutch pedal 18 is completely released and the vehicle is stopped after the clutch control flag Xch is set to "1" in the clutch control flag Xch setting routine A (FIG. 9). In this case, the shift lever 10 can be shifted from the neutral position into a driving position regardless of the fact that the driver has released clutch pedal 18 to apply the clutch 4, just as is described in the first exemplary embodiment.

At this time, the clutch control flag Xch setting routine B (FIG. 10) is repeated with the determination in step S352 continuing to be "YES" and the determinations in steps S360 and S366 continuing to be "NO". When the driver attempts to shift the shift lever 10 from the neutral position into a driving position in this state, the NTRL changes to "OFF" (i.e., "YES" in step S366) and a warning sound or voice warning is output from a buzzer or a speaker or the like provided in the dashboard (step S368). As a result, the driver can be reminded of the fact that he or she is attempting to shift the shift lever 10 into a driving position while operation of the clutch pedal 18 is not being reflected in the clutch 4, so that an unpleasant sensation is not imparted to the driver. Then when the driver responds to the warning and returns the shift lever 10 to the neutral position, the determination in step S366 changes back to "NO" and output of the warning can be stopped.

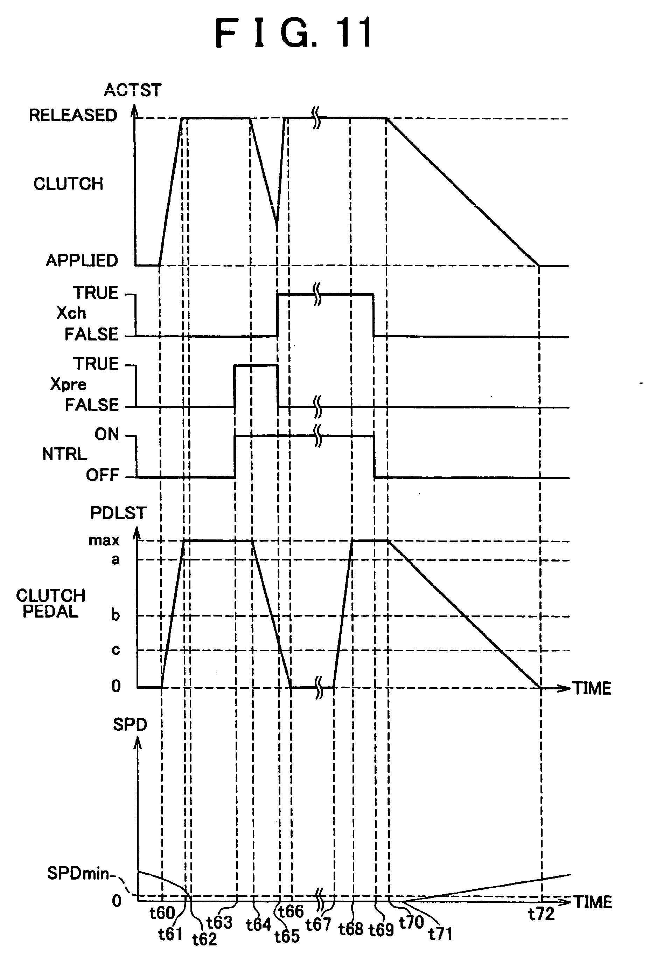

One example of control according to the exemplary embodiment is shown with the timing charts in FIGS. 11 to 15. FIG. 11 shows an example in which the driver depresses the clutch pedal 18 to release the clutch 4, shifts the shift lever 10 into the neutral position, and then releases the clutch pedal 18 when the vehicle is stopped, such as when waiting at a stoplight. First, while the vehicle speed SPD is gradually being reduced by braking, the driver depresses the clutch pedal 18 (time t60 to time t61). At this time, Xch = "0" and the clutch 4 is made to reflect the operation of the clutch pedal 18, so the clutch 4 is released according to the operation of the clutch pedal 18 (time t61).

Then, the vehicle speed SPD becomes equal to, or less than, the threshold value SPDmin (i.e., "YES" in step S302 at time t62) and the shift lever 10 is shifted into the neutral position (i.e., NTRL = "ON") by an operation by the driver (i.e., "YES" in step S310 at time t63). Accordingly, the prerequisite flag Xpre changes from "0" to "1" (step S312), but because clutch control flag Xch is still "0", the operation of the clutch pedal 18 is reflected in the clutch 4.

Then the driver completely releases the clutch pedal 18 (time t64 to time t66). Because the operation stroke amount PDLST is equal to, or less than, the threshold value c during this time (i.e., "YES" in step S316 at time t65), the clutch control flag Xch changes to "1" (step S318) and the prerequisite flag Xpre changes back to "0" (step S320). Therefore, the operation of the clutch pedal 18 is no longer reflected in the clutch 4 and the clutch 4 remains in the released state. As a result, the clutch 4 is able to be maintained in the released state without the driver having to apply operating force to operate the clutch pedal 18, and rattling is not generated.

Then while the driver is depressing the clutch pedal 18 to start driving the vehicle (time t67 to time t68), the operation stroke amount PDLST becomes greater than b (i.e., "YES" in step S360 in FIG. 10). At this time, however, because NTRL = "ON" (i.e., "NO" in step S362 in FIG. 10), Xch = "1" is maintained such that the clutch 4 continues to remain in the released state.

Shifting the shift lever 10 into a driving position (time t69) results in NTRL = "OFF" (i.e., "YES" in step S362) such that the clutch control flag Xch returns to "0" (step S364). As a result, operation of the clutch pedal 18 thereafter is reflected in the clutch 4. Accordingly, the clutch 4 is applied as the operation stroke amount PDLST decreases (time t70 to time t72). During this time the vehicle starts to be driven (time t71).

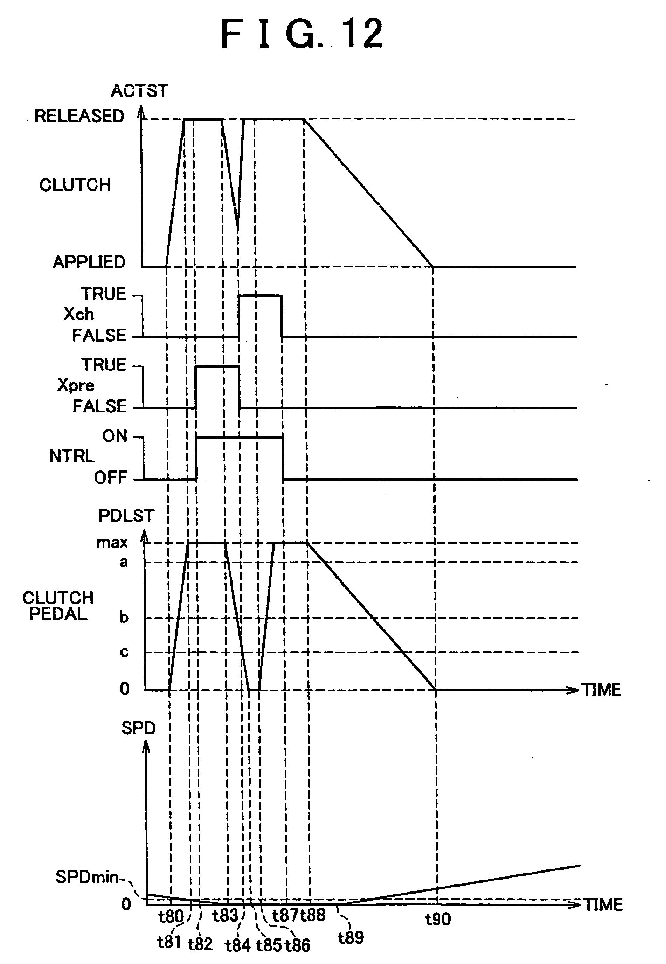

FIG. 12 illustrates a case in which the gears in the transmission do not engage smoothly and a shift is unable to be performed (i.e., up-lock occurs) when attempting to shift the shift lever 10 from the second speed position to the first speed position while driving the vehicle.

First, while the vehicle speed SPD is gradually decreasing, the clutch pedal 18 is depressed thus releasing the clutch 4 (time t80 to time t81). Then the driver attempts to shift the shift lever 10 from the second speed position to the first speed position (or the reverse position) (time t82). However, because up-lock occurs when the driver attempts to shift the shift lever 10 into the first speed position, the shift lever 10 is unable to be shifted into that position, so it is maintained in the neutral position.

Then the driver releases the clutch pedal 18, thereby reapplying the clutch 4 in order to unlock the lockup due to gear rotation inside the transmission 6 (time t83 to time t85). At this time, the clutch control flag Xch is maintained at "0" as long as the operation stroke amount PDLST is greater than the threshold value c (time t83 to time t84). Therefore, as the actuator stroke amount ACTST temporarily approaches the points where application of the clutch 4 is complete according to the threshold value c, the gears start to rotate in the transmission 6. Then because the operation stroke amount PDLST becomes equal to, or less than c (i.e., "YES" in step S316 in FIG. 9) and the clutch control flag Xch is set to "1" (step S318 in FIG. 9 at time t84), the clutch 4 is retained in the released state irrespective of the operating state of the clutch pedal 18.

Then the driver again attempts to release the clutch 4 by depressing the clutch pedal 18 (time t86), but the clutch 4 is already in a released state as described above. The driver then attempts to shift the shift lever 10 from the second speed position to the first speed position (time t87). Because the lockup is unlocked, the shift lever 10 is able to be shifted from the neutral position to the first speed position at this time. Shifting the shift lever 10 to the first speed "1st" position (i.e., "YES" in step S362 in FIG. 10) changes the clutch control flag Xch back to "0" (step S364 in FIG. 10). Thereafter, the clutch 4 reflects the operation by the driver to release the clutch pedal 18 such that the clutch 4 becomes applied (time t88 to time t90). This operation thus connects the transmission 6 with the engine 2 such that the vehicle starts to be propelled from this point (time t89).

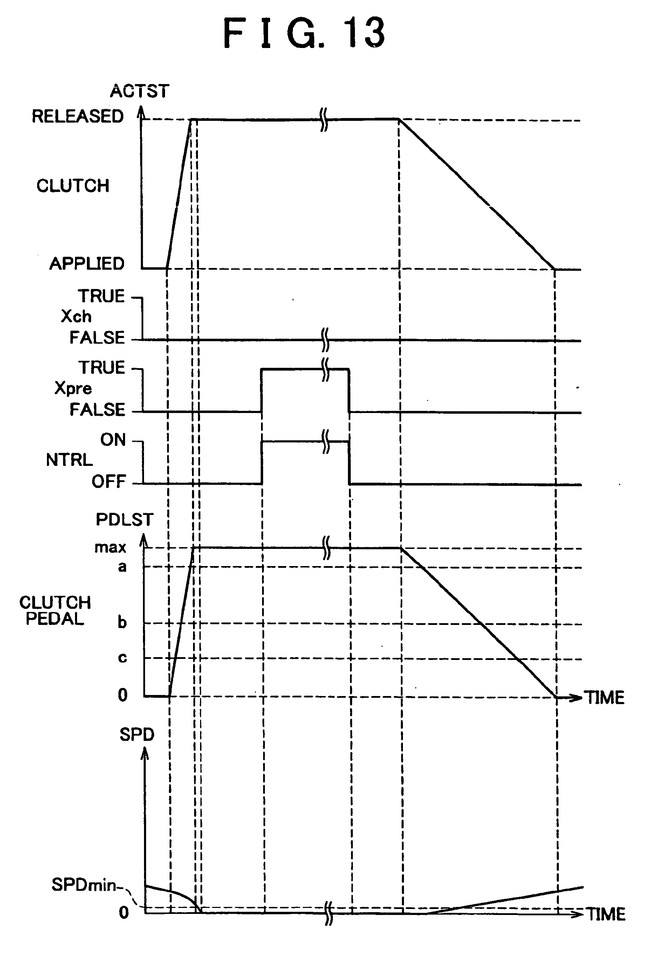

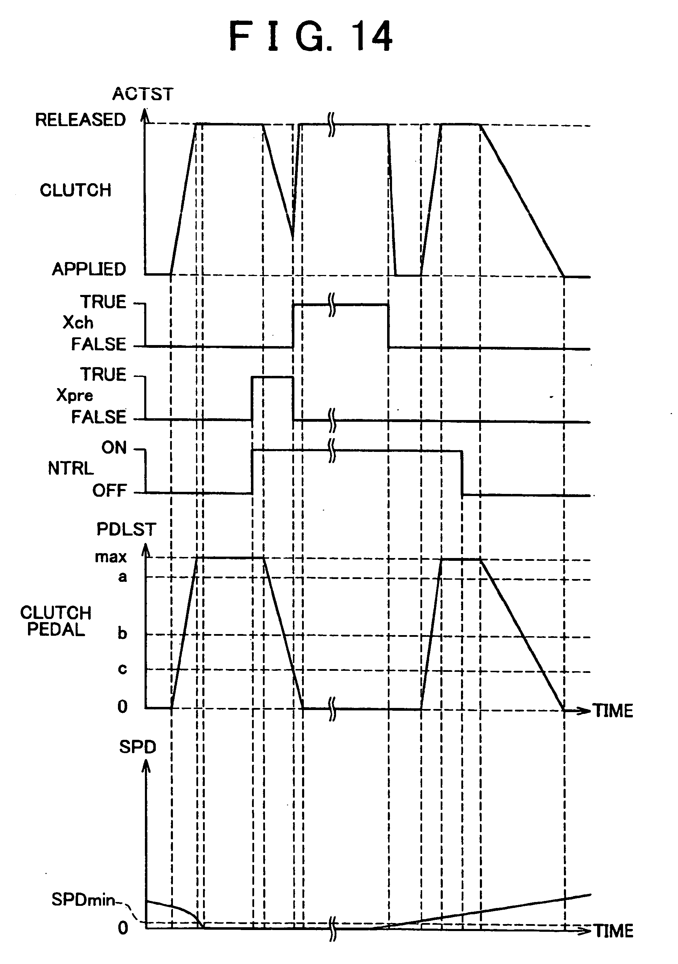

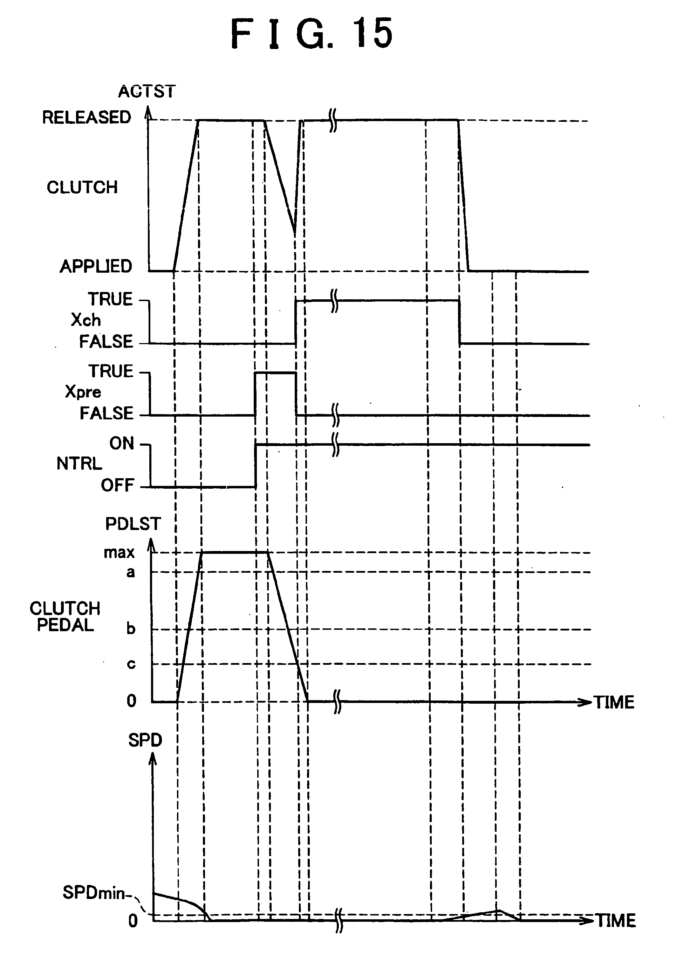

FIG. 13 illustrates an example in which the driver depresses the clutch pedal 18 while driving and shifts the shift lever 10 from the second speed position into the neutral position. FIG. 14 illustrates an example in which the driver then shifts the shift lever 10 from the neutral position into the first speed position. FIG. 15 illustrates an example in which the driver then stops the vehicle again after it has started to travel downhill.

In the foregoing embodiment, step S 106 in the clutch driving routine (FIG. 2) and the clutch control flag Xch setting routines A and B (FIGS. 9 and 10) correspond to the clutch-released maintaining means and the warning means.

Hereinafter, effects obtained from the second exemplary embodiment will be described.
a) According to this exemplary embodiment, after Xpre = "1", when an operation to switch the clutch 4 from the released state to the applied state using the clutch pedal 18 is detected (i.e., "YES" in step S316 in FIG. 9), the clutch control flag Xch changes to "1" (step S318 in FIG. 9) so the clutch 4 is maintained in the released state.

Accordingly, depending on the threshold value c, the clutch 4 is partially applied before the clutch 4 is made to no longer reflect the operating state of the clutch pedal 18. However, even if the clutch 4 is partially applied, it is only temporary so rattling will not be generated and the effects in a) through f) of the first exemplary embodiment are obtained.
b) Even if lockup occurs when the vehicle is stopped, setting the value of the threshold value c to a rather small value can temporarily render the clutch 4 in the partially applied state, which allows the lockup to be easily unlocked. Accordingly, the operation by the driver to apply the clutch 4 in order to unlock the lockup is able to be performed normally such that the driver feels no unpleasantness even if lockup occurs.

Next, a vehicle control apparatus according to a third exemplary embodiment of the invention will be described.
In this exemplary embodiment the threshold value c used in step S317 in FIG. 9 is set to "0". That is, the condition Xch = "1" corresponds to the operating state in which the clutch pedal 18 has been completely released. Aside from this, the construction is the same as that in the second exemplary embodiment.

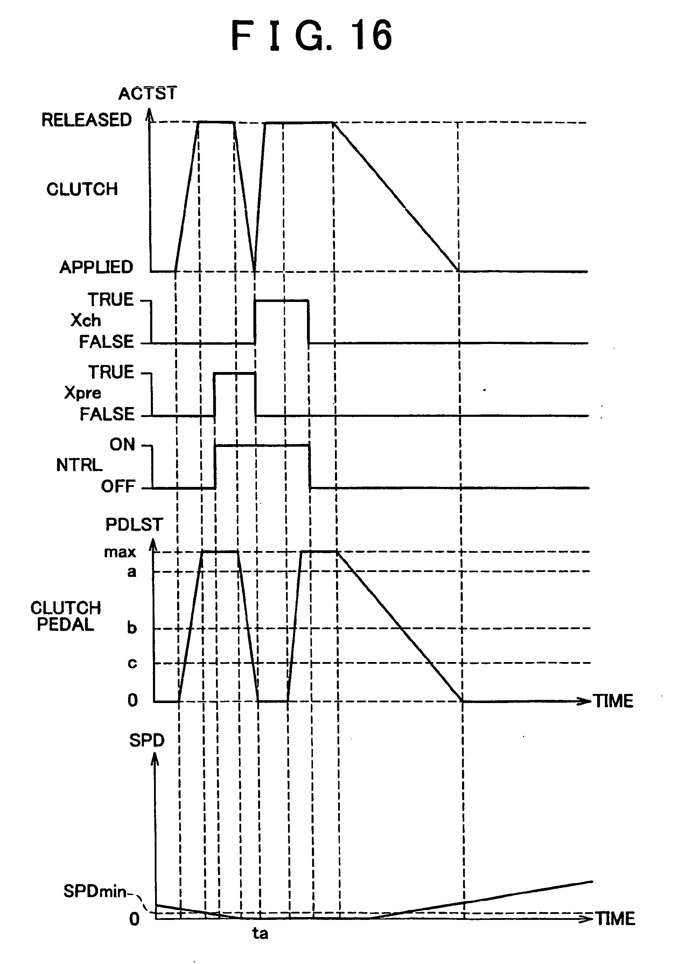

According to this construction, during lockup, the clutch control flag Xch becomes "1" when the clutch 4 is fully applied (ta) as shown in FIG. 16. With this construction, the same effects as a) and b) in the second exemplary embodiment are obtained. However, because the clutch 4 is fully applied for a moment, the gears inside the transmission 6 are able to be reliably rotated temporarily, thus enabling the lockup to be more reliably unlocked.

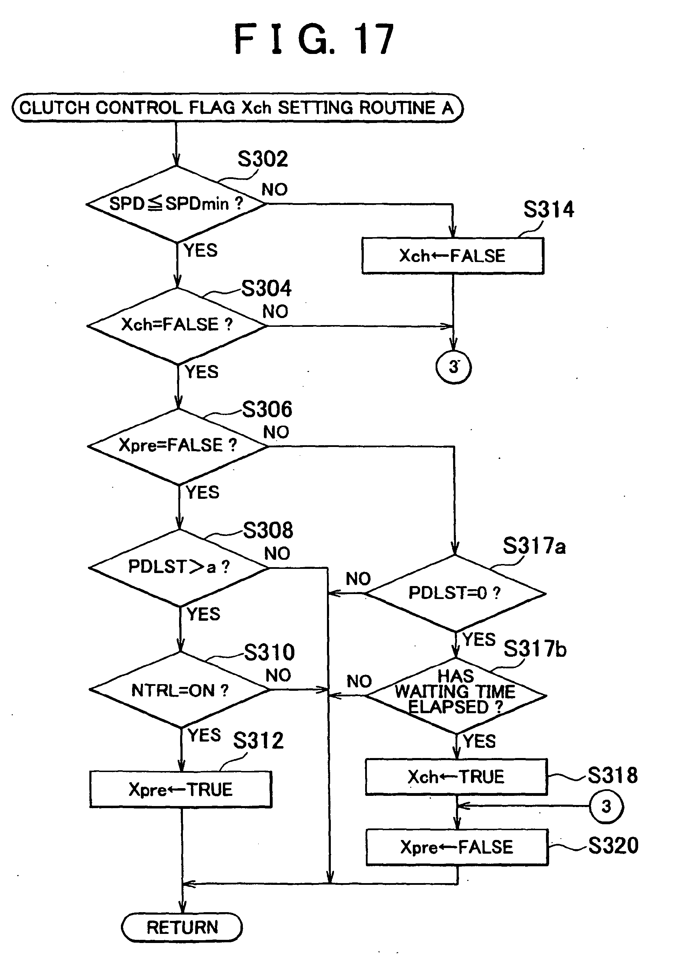

Next, a vehicle control apparatus according to a fourth exemplary embodiment of the invention will be described.
In this exemplary embodiment, the clutch control flag Xch setting routine A shown in FIG. 17 is executed instead of, but with the same cycle as, the clutch control flag Xch setting routine A shown in FIG. 9. Aside from this, the construction is the same as that in the second exemplary embodiment.

In the clutch control flag Xch setting routine (FIG .17) in this exemplary embodiment, steps S317a and S317b are executed instead of step S316 in FIG. 9. All of the other steps are the same so they are denoted by the same step numbers.

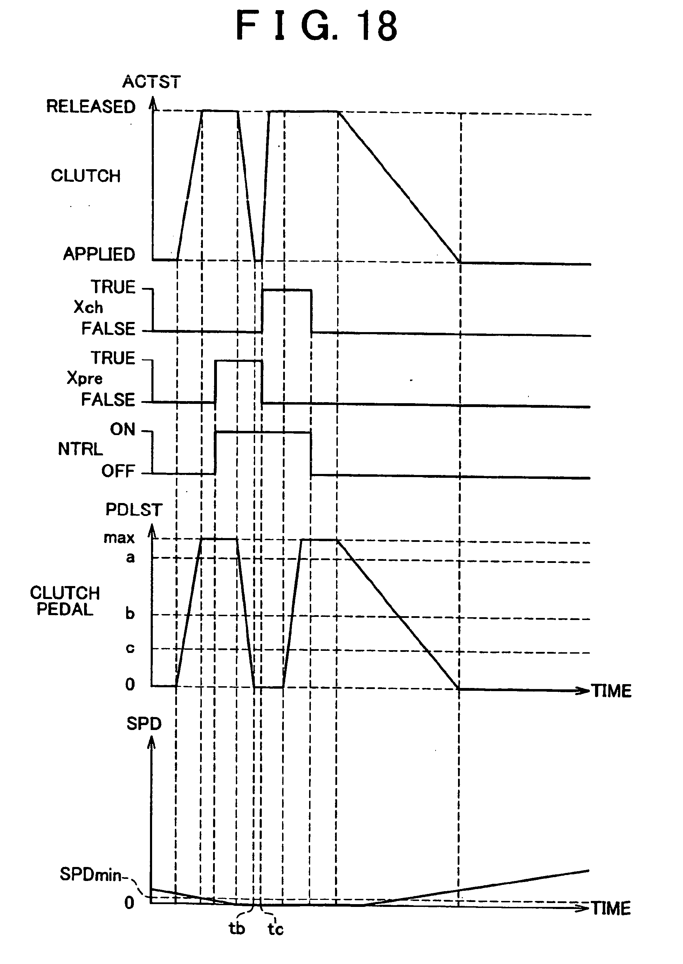

In the clutch control flag Xch setting routine A (FIG. 17), when a waiting time has elapsed (i.e., "YES" in step S317b) while the clutch pedal 18 is in the fully released state (i.e., "YES" in step S317a), Xch = "1" (step S318). According to this construction, during lockup, Xch changes "1" after the clutch 4 is fully applied (tb) as shown in FIG. 18 and is maintained in that state for a while (tc).

According to this construction, the same effects as those of the third exemplary embodiment are obtained. However, because a waiting time is provided, the gears in the transmission 6 are able to be rotated temporarily with even more reliability, thus enabling lockup to be unlocked with even greater reliability.

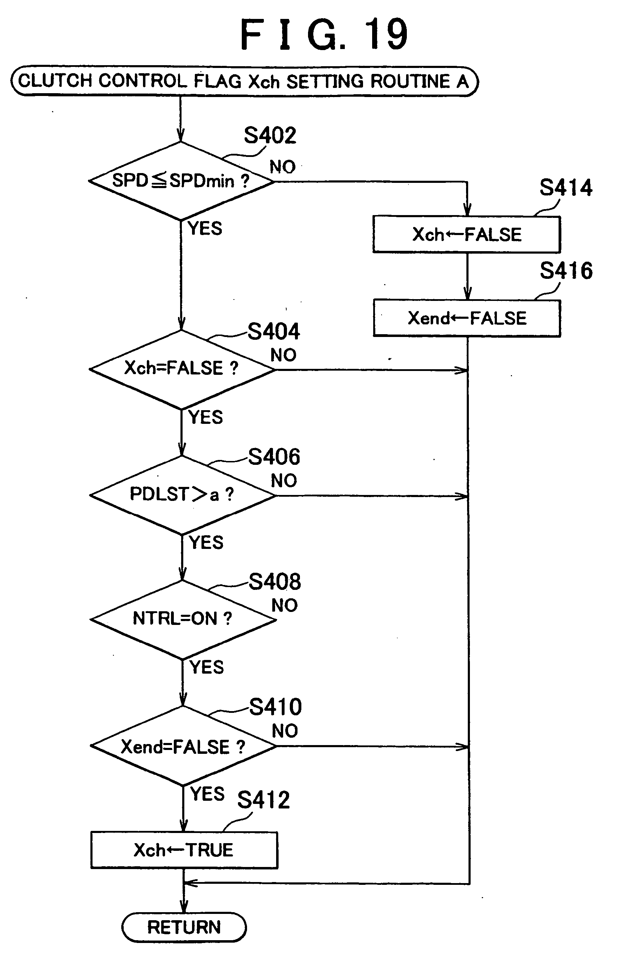

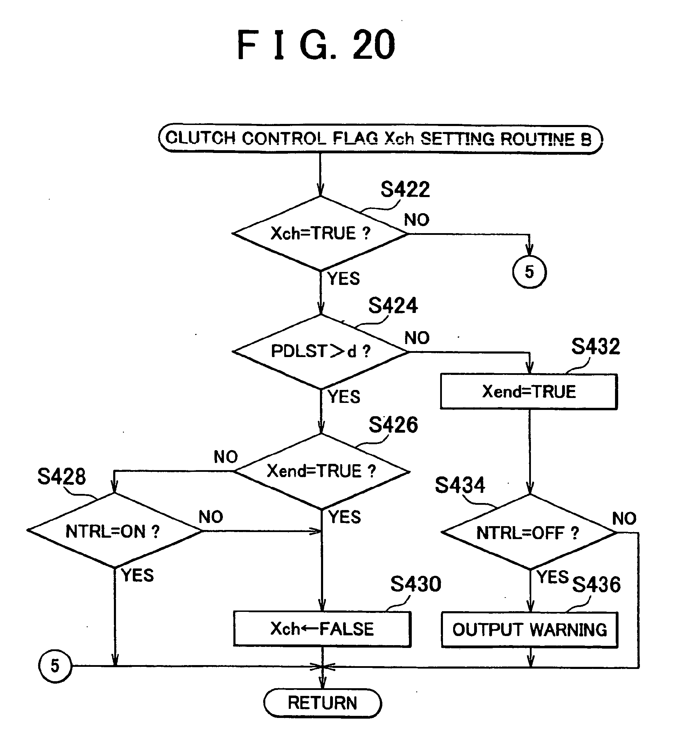

Next, a vehicle control apparatus according to a fifth exemplary embodiment of the invention will be described.
In this exemplary embodiment, the clutch control flag Xch setting routine A shown in FIG. 19 and the clutch control flag Xch setting routine B shown in FIG. 20 are executed instead of, but with the same cycle as, the clutch control flag Xch setting routine shown in FIG. 4. Aside from this, the construction is the same as that in the first exemplary embodiment. The clutch control flag Xch setting routine B (FIG. 20) is executed after the clutch control flag Xch setting routine A (FIG. 19).

When the clutch control flag Xch setting routine A (FIG. 19) starts, it is first determined whether the vehicle is stopped (i.e., SPD ≤ SPDmin) (step S402). If SPD > SPDmin (i.e., "NO" in step S402), then the clutch control flag Xch is set to "0" (step S414) and a preparation flag Xend is set to "0" (step S416), after which the routine ends.

On the other hand, if SPD ≤ SPDmin (i.e., "YES" in step S402), then it is determined whether Xch = "0" (step S404). If Xch = "0" (i.e., "YES" in step S404), then it is determined whether the operation stroke amount PDLST is greater than a threshold value a (step S406). The threshold value a is a determination value used to estimate whether the driver has performed an operation to release the clutch 4 with the clutch pedal 18 as described in step S206 in FIG. 4 above.

If PDLST ≤ a (i.e., "NO" in step S406), it can be determined that the driver has not performed an operation to release the clutch 4 and the routine ends at that point. If PDLST > a (i.e., "YES" in step S406), it is next determined whether the neutral position NTRL signal from the neutral switch 10a is "ON" (step S408). If the shift lever 10 is not in the neutral position, NTRL = "OFF" (i.e., "NO" in step S408) and the routine ends at this point.

If PDLST > a (i.e., "YES" in step S406) and NTRL = "ON" (i.e., "YES" in step S408), it is next determined whether Xend = "0" (step S410). If Xend = "0" (i.e., "YES" in step S410), it can be determined that the driver has stopped the vehicle, such as when waiting at a stoplight, has released the clutch 4 and shifted the transmission 6 into neutral. As a result, the clutch control flag Xch is set to "1" (step S412) and the routine ends at this point. Accordingly, the determination in step S102 in the clutch driving routine (FIG. 2) is "NO" so the process (step S106 in FIG. 2) is performed in which the clutch 4 is made to not reflect the operation of the clutch pedal 18 so the clutch 4 is maintained in the released state.

In the next control cycle, after the determination in step S402 is "YES", Xch = "1" (i.e., "NO" in step S404) so the routine ends at this point.

Next, the clutch control flag Xch setting routine B (FIG. 20) will be described. First it is determined whether Xch = "1" (step S422). If the clutch control flag Xch is still not set to "1" in the clutch control flag Xch setting routine A (FIG. 19) (i.e., "NO" in step S422), the routine ends at this point.

On the other hand, if Xch = "1" in the clutch control flag Xch setting routine A (FIG. 19) (i.e., "YES" in step S422), it is then determined whether the operation stroke amount PDLST is greater than a threshold value d (step S424). This threshold value d is a determination value used to estimated whether the driver has released the clutch pedal 18. The relationship between the threshold value d and the threshold value a is such that the threshold value d is less than the threshold value a.

Immediately after the clutch control flag Xch changes to "1", the operation stroke amount PDLST becomes greater than d (i.e., "YES" in step S424) so it is determined whether Xend = "1" (step S426). Immediately after the clutch control flag Xch changes to "1", Xend = "0" (i.e., "NO" in step S426) so it is then determined whether NTRL = "ON" (step S428). Immediately after the clutch control flag Xch changes to "1", NTRL = "ON" (i.e., "YES" in step S428) so the routine ends at this point.

Thereafter, the determination in step S428 continues to be "YES" while the driver is fully depressing the clutch pedal 18. Therefore, Xch = "1" and Xend = "0" are maintained.

When the driver releases the clutch pedal 18 and the clutch 4 is applied such that PDLST ≤ d (i.e., "NO" in step S424), the preparation flag Xend is set to "1" (step S432). Then it is determined whether NTRL = "OFF" (step S434). Unless the driver shifts the shift lever 10 into a driving position, NTRL = "ON" (i.e., "NO" in step S434) and the process ends at this point.

Thereafter, unless the driver performs a shift operation while the vehicle is stopped, the determination in step S422 continues to be "YES", and the determinations in steps S424 and S434 continue to be "NO" such that Xch = "1" and Xend = "1" are maintained. In the clutch control flag Xch setting routine A (FIG. 19), the determination in step S402 continues to be "YES" and the determination in step S404 continues to be "NO". Therefore, even if the driver completely releases the clutch pedal 18, the clutch 4 continues to remain in the released state.

Next, when the driver depresses the clutch pedal 18 in order to start driving the vehicle and the operation stroke amount PDLST becomes greater than d (i.e., "YES" in step S424), it is then determined whether Xend = "1" (step S426). At this time, because Xend = "1" (i.e., "YES" in step S426) and it is estimated that the vehicle is taking off from a standstill after waiting at a stoplight or the like, the clutch control flag Xch is set to "0" (step S430) and the routine ends.

Accordingly, because the clutch control flag Xch has changed to "0", the determination in step S102 in the clutch driving routine (FIG. 2) is "YES" so the process (step S104) is executed to reflect the operation of the clutch pedal 18 in the clutch 4).

In the next control cycle, because Xch = "0" (i.e., "NO" in step S422), the routine ends at this point and Xch = "0" is maintained. While, PDLST ≤ a in the clutch control flag Xch setting routine A (FIG. 19), the determinations in steps S402 and S404 are "YES" and the determination in step S406 is "NO" and the routine ends. Therefore, Xch = "0" is maintained. Further, even if the operation stroke amount PDLST becomes greater than a (i.e., "YES" in step S406), after the determination in step S408 is "YES", the determination in step S410 is "NO" because Xend = "1". Therefore, Xch = "0" is maintained. Even if the shift lever 10 is shifted into a driving position by the driver (i.e., "NO" in step S408), Xch = "0" is maintained. Furthermore, even if the driver releases the clutch pedal 18 (i.e., "NO" in step S406), Xch = "0" is maintained.

Then, if the vehicle speed SPD becomes greater than the threshold value SPDmin (i.e., "NO" in step S402) due to the fact that the vehicle has started to be driven, the preparation flag Xend changes back to "0" by execution of step S416. As a result, the process described above can be repeated again when the vehicle is next stopped.

In the clutch control flag Xch setting routine B (FIG. 20), when Xch = "1" (i.e., "YES" in step S422) and the clutch pedal 18 has been released (i.e., "NO" in step S424), the operating state of the clutch pedal 18 does not actually match the state of the clutch 4. Therefore, although it is possible to shift the shift lever 10 into a driving position, NTRL changes to "OFF" when an attempt to do so is made (i.e., "YES" in step S434) which results in a warning being output from a buzzer or speaker provided in the dashboard (step S436). As a result, the driver can be reminded of the fact that he or she is attempting to shift the shift lever 10 into a driving position while operation of the clutch pedal 18 is not being reflected in the clutch 4, as described in step S220 in FIG. 4, so that an unpleasant sensation is not imparted to the driver. Then when the driver responds to the warning and returns the shift lever 10 to the neutral position, the determination in step S434 changes back to "NO" so output of the warning can be stopped.

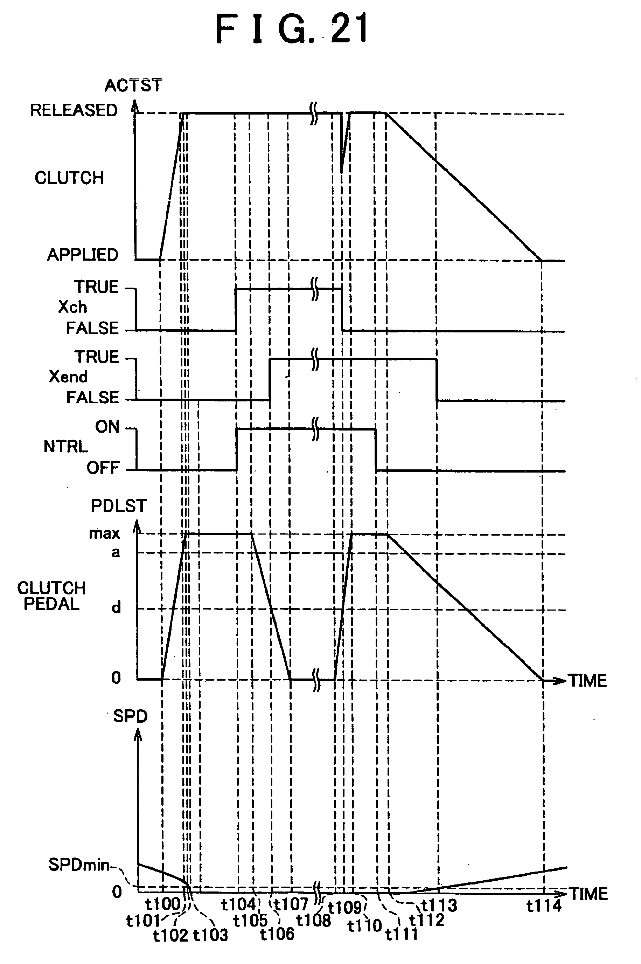

FIGS. 21 to 25 are timing charts illustrating examples of control according to the exemplary embodiment. FIG. 21 shows an example in which the driver depresses the clutch pedal 18 to release the clutch 4, shifts the shift lever 10 into the neutral position, and then releases the clutch pedal 18 when the vehicle is stopped, such as when waiting at a stoplight. First, while the vehicle speed SPD is gradually being reduced by braking, the driver depresses the clutch pedal 18 (time t100 to time t102). At this time, the operation stroke amount PDLST becomes greater than a (time t101). At this time Xch = "0" and the clutch 4 is made to reflect the operation of the clutch pedal 18, so the clutch 4 is released according to the operation of the clutch pedal 18 (time t102).

Then, the vehicle speed SPD becomes equal to, or less than, the threshold value SPDmin (i.e., "YES" in step S402 at time t103) and the shift lever 10 is shifted into the neutral position (i.e., NTRL = "ON") by an operation by the driver (i.e., "YES" in step S408 at time t104). Accordingly, the clutch control flag Xch changes from "0" to "1" (step S412) and the clutch 4 is kept in the released state.

The clutch pedal 18 is then completely released (time t105 to time t107), but because the clutch control flag Xch is already "1", the clutch 4 is kept in the released state and does not reflect the operating state of the clutch pedal 18. Therefore, the clutch 4 can be maintained in the released state such that no rattling is generated, without the driver having to apply operating force to the clutch pedal 18. The operation stroke amount PDLST becomes equal to, or less than, d while the clutch pedal 18 is being released (time t106) so the preparation flag Xend becomes "1" at this time.

Then when the driver depresses the clutch pedal 18 to start driving the vehicle (time t108) and the PDLST becomes greater than d ("YES" in step S424 from time t109 on), the clutch control flag Xch changes back to "0" (step S430). Accordingly, because the clutch 4 is made to reflect the depressed state of the clutch pedal 18 from this time on, it returns after being driven to the applied side to the released state as the clutch pedal 18 is depressed (time t110).

Then when the shift lever 10 is shifted into a driving position (time t111), NTRL = "OFF". When the clutch pedal 18 is then released, the clutch 4 becomes applied according to that operation of the clutch pedal 18 (time t112 to time t114). During this time, the vehicle speed SPD becomes greater than the threshold value SPDmin (time t113) so the preparation flag Xend changes back to "0" (step S416).

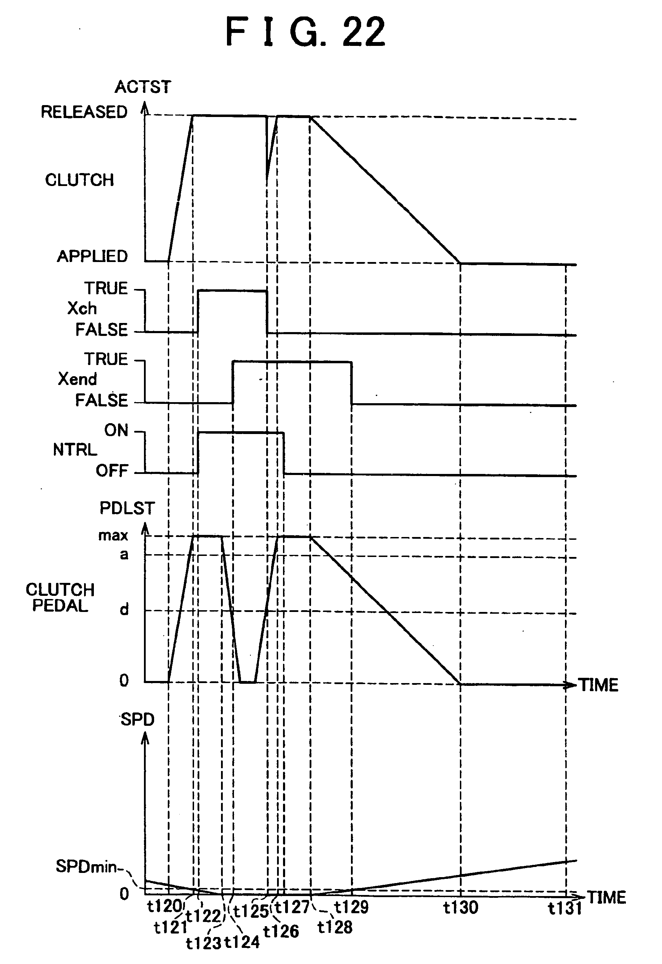

FIG. 22 illustrates a case in which lockup has occurred when the shift lever 10 has been shifted from the second speed position to the first speed position while driving the vehicle in attempt to stop the vehicle. First, while the vehicle speed SPD is gradually being reduced, the driver depresses the clutch pedal 18 and releases the clutch 4 (time t120 to time t121). Then the driver attempts to shift the shift lever 10 from the second speed position into the first speed position (time t122). However, lockup occurs when the driver is shifting the shift lever 10 into the first speed position such that the shift lever 10 is unable to be shifted into that position. As a result, the shift lever 10 is maintained in the neutral position. Accordingly, the clutch control flag Xch changes to "1".

Then the driver lets up once on the clutch pedal 18 and then depresses it again in order to reapply the clutch 4 so as to unlock the lockup due to gear rotation inside the transmission 6 (time t123 to time t126). At this time, PDLST ≤ d (i.e., "NO" in step S424 at time t124) so the preparation flag Xend is set to "1" (step S432). Depressing the clutch pedal 18 again results in PDLST > d (i.e., "YES" in step S424 at time t124) so the clutch control flag Xch changes back to "0" (step S430).

When the clutch pedal 18 is depressed again, the clutch 4 temporarily becomes partially engaged such that the lockup is unlocked by the rotation of the gears within the transmission 6. As a result, the shift lever 10 can be shifted from the neutral position into the first speed position (time t127). Thereafter, when the driver releases the clutch pedal 18 (time t128 to time t130), the clutch 4 becomes applied and the vehicle starts to be driven. When the vehicle speed SPD becomes greater than the threshold value SPDmin (i.e., "NO" in step S402 at time t129), the preparation flag Xend changes back to "0" (step S416).

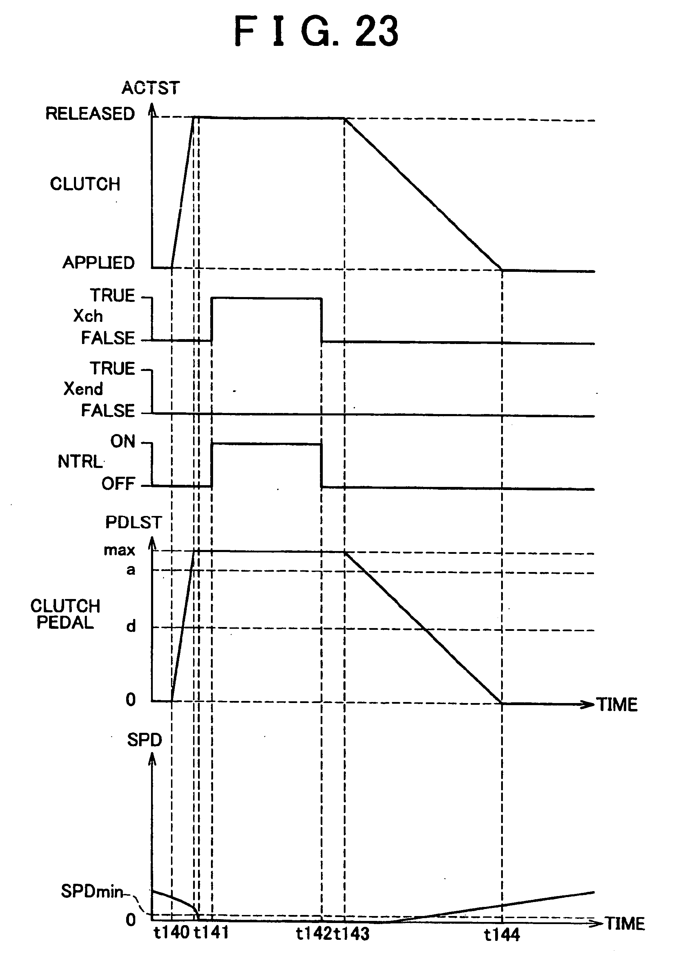

FIG. 23 shows an example in which the driver shifts the shift lever 10 from the second speed position first into neutral and then into the first speed position while keeping the clutch pedal 18 depressed while the vehicle is stopped. Time t140 to time t141 in this drawing progresses the same as time t100 to time t104 in FIG. 21. In this case, the driver shifts the shift lever 10 from the neutral position into the first speed position while keeping the clutch pedal 18 depressed (i.e., "NO" in step S428 in FIG. 20 at time t142). Accordingly, the clutch control flag Xch changes back to "0" (step S430) so the clutch 4 is made to reflect the operation of the clutch pedal 18. Thereafter, when the driver releases the clutch pedal 18, the clutch 4 becomes applied accordingly (time t143 to time t144) so the vehicle starts to be driven.

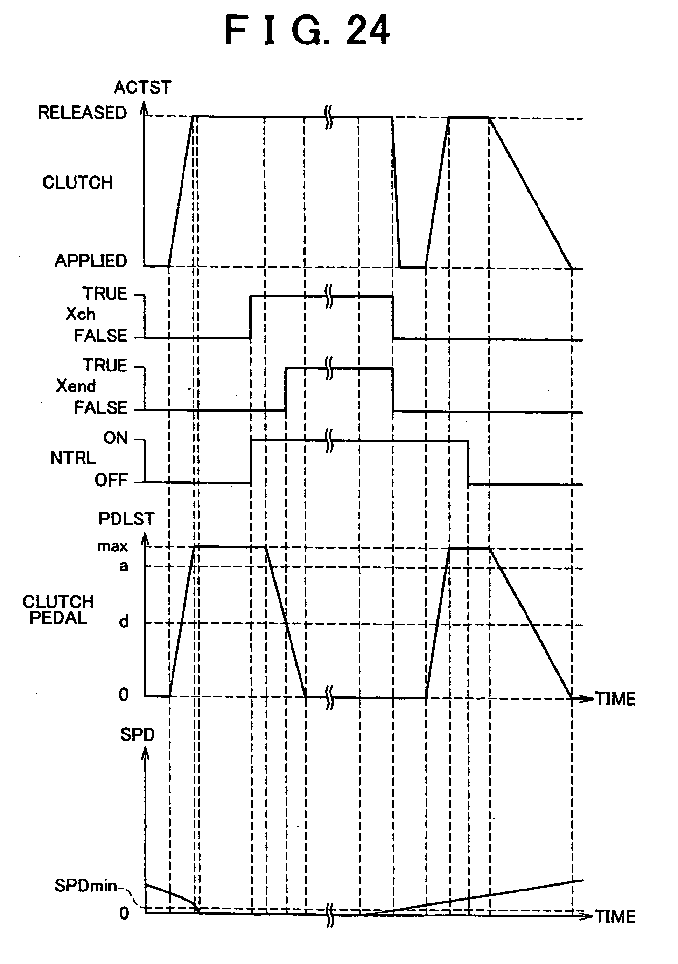

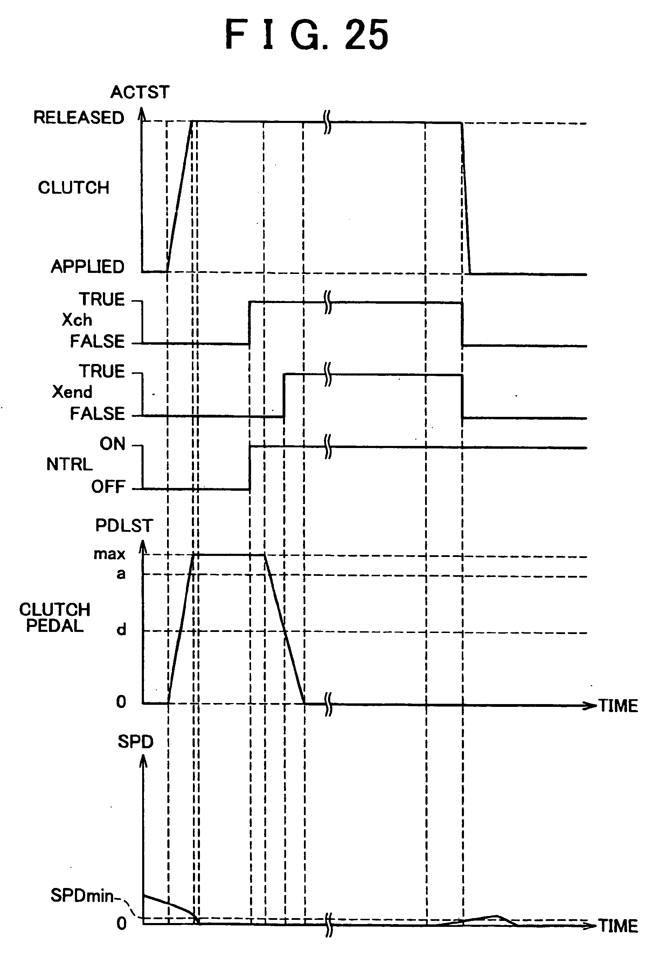

FIG. 24 shows an example of the vehicle which starts to take off from a standstill on a downward slope, and FIG. 25 shows an example in which the vehicle that has started to run on a downward slope is stopped again. In the foregoing construction, the process for maintaining the clutch 4 in a released state (step S 106) in the clutch driving routine ( FIG. 2) and the clutch control flag Xch setting routines A and B (FIGS. 19 and 20) correspond to the processes of the clutch released maintaining means and the warning means.

Hereinafter, effects obtained from the fifth exemplary embodiment will be described.
a) The effects of a) and c) through f) of the first exemplary embodiment are obtained.
b) In this exemplary embodiment, when the driver has performed an operation to release the clutch 4 using the clutch pedal 18, it is estimated that he or she will continue driving. From this time, the reflecting process of step S 104 in FIG. 2 is executed again. Accordingly, when the driver uses the clutch pedal 18 to apply the clutch 4 thereafter, he or she does not feel an unpleasant sensation because the clutch 4 actually reflects the operation of the clutch pedal 18 and becomes applied.

Further, because only the depression of the clutch pedal 18 is used as a trigger to make the clutch 4 reflect the operation of the clutch pedal 18 again, even if lockup occurs, it is possible to easily unlock that lockup as described in FIG. 22. Therefore, even if lockup occurs, the driver does not feel an unpleasant sensation.

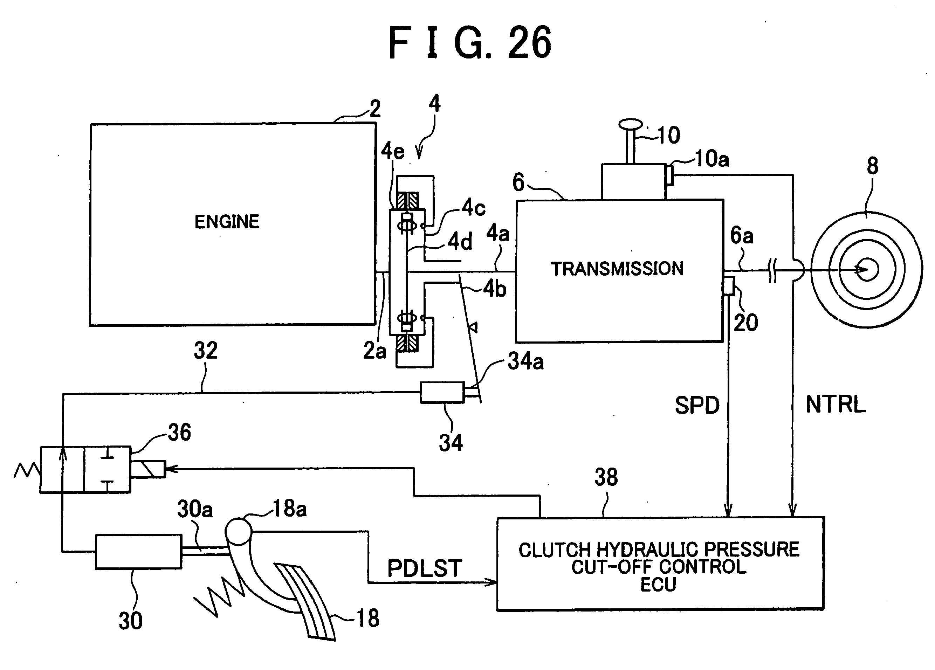

Next, a vehicle control apparatus according to a sixth exemplary embodiment of the invention will be described.
This exemplary embodiment differs from the other exemplary embodiments one through five in that a clutch driving mechanism shown in FIG. 26 is provided. The structure in this drawing that is the same as the structure in FIG. 1 will be denoted with the same reference numerals and characters, and descriptions thereof will be omitted.

The clutch driving mechanism is a hydraulic clutch driving mechanism which transmits operating force (i.e., pressure) applied to the clutch pedal 18 by the driver to the clutch 4 by hydraulic pressure. The operating force from the clutch pedal 18 drives a master piston inside a master cylinder 30 via a push rod 30a. Accordingly, the operating force of the clutch pedal 18 is converted into hydraulic pressure and transmitted to a release cylinder 34 via a hydraulic pressure path 32. As a result, a release cylinder piston inside the release cylinder 34 is driven so as to turn the clutch release fork 4b via a push rod 34a, thus adjusting the pressure on the diaphragm spring 4c.

A hydraulic pressure cut-off valve 36, which is an electromagnetic valve, is provided midway in the hydraulic pressure path 32. When this hydraulic pressure cut-off valve 36 is "OFF", i.e., when no driving current is being supplied to the hydraulic pressure cut-off valve 36 from a clutch hydraulic pressure cut-off control ECU 38, the hydraulic pressure cut-off valve 36 is open, thus allowing hydraulic fluid to flow through the hydraulic pressure path 32. When the hydraulic pressure cut-off valve 36 is "ON", i.e., when driving current is being supplied to the hydraulic pressure cut-off valve 36 from the clutch hydraulic pressure cut-off control ECU 38, the hydraulic pressure cut-off valve 36 is closed, thus preventing hydraulic fluid from flowing through the hydraulic pressure path 32.

The clutch hydraulic pressure cut-off control ECU 38 is constructed as an electronic control circuit, the main component of which is a microcomputer that includes ROM, RAM, an interface circuit, and a driver circuit. The clutch hydraulic pressure cut-off control ECU 38 inputs the detection results of the operation stroke amount PDLST from the operation stroke sensor 18a, the vehicle speed SPD from the vehicle speed sensor 20, and the neutral position NTRL from the neutral switch 10a.

The clutch hydraulic pressure cut-off control ECU 38 then executes a calculation process according to a program written in the ROM based on those signals, and energizes or de-energizes the hydraulic pressure cut-off valve 36 using the driving current so as to either enable or interrupt transmission of the operating force of the clutch pedal 18 through the hydraulic pressure path 32.

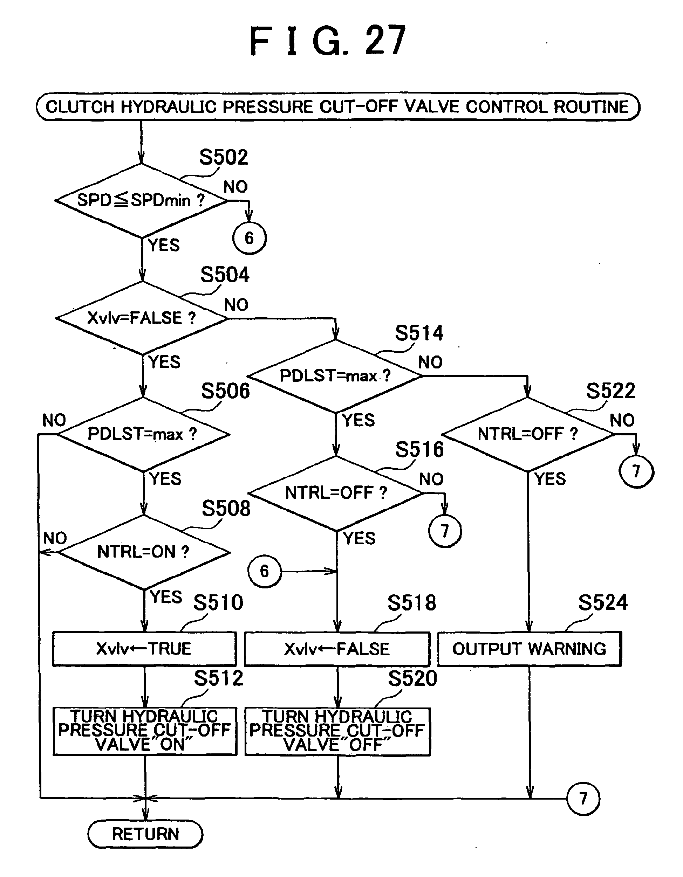

FIG. 27 shows a routine for controlling the clutch hydraulic pressure cut-off valve executed by the clutch hydraulic pressure cut-off control ECU 38. This routine is repeatedly executed at short-interval cycles. At the beginning of the routine, it is first determined whether SPD ≤ SPDmin (step S502). If SPD > SPDmin (i.e., "NO" in step S502), then a hydraulic pressure cut-off flag Xvlv is set to "0" (step S518) and the hydraulic pressure cut-off valve 36 is set to "OFF" (step S520). The routine then ends.

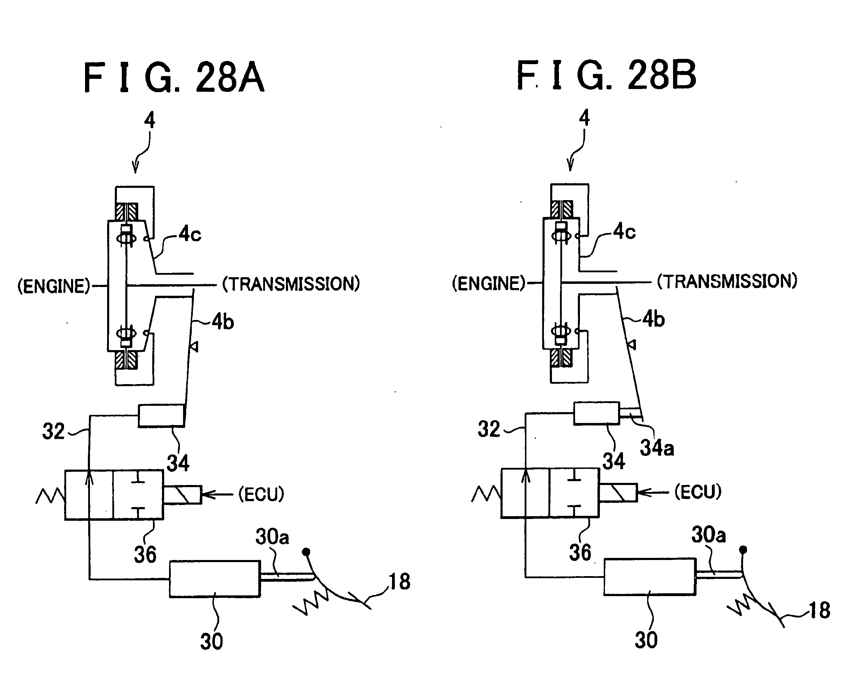

Therefore, the hydraulic pressure path 32 is open as shown in FIGS. 28A and 28B such that when the driver performs an operation to apply the clutch 4 with the clutch pedal 18 as shown in FIG. 28A, the clutch 4 reflects that operation and becomes applied, and when the driver performs an operation to release the clutch 4 with the clutch pedal 18 as shown in FIG. 28B, the clutch 4 reflects that operation and releases.

On the other hand, if the SPD ≤ SPDmin (i.e., "YES" in step S502), it is then determined whether Xvlv = "0" (step S504). If Xvlv = "0" (i.e., "YES" in step S504), it is next determined whether the operation stroke amount PDLST has reached a maximum value max (step S506). That is, it is determined whether the clutch 4 is fully released by the driver depressing the clutch pedal 18 all the way. Alternatively, a value slightly less than the maximum value max may be used instead of the maximum value max as a determination value, and it may be determined whether the operation stroke amount PDLST is greater than this determination value.

If PDLST < max (i.e., "NO" in step S506), it can be determined that the driver is not performing an operation to release the clutch and the routine ends at this point. On the other hand, if PDLST = max (i.e., "YES" in step S506), is next determined whether the neutral position NTRL signal from the neutral switch 10a is "ON" (step S508). If the shift lever 10 is not in the neutral position, NTRL = "OFF" (i.e., "NO" in step S508) and the routine ends at this point.

If PDLST = max (i.e., "YES" in step S506) and NTRL = "ON" (i.e., "YES" in step S508), it can be determined that the driver is performing an operation to release the clutch 4 and the transmission is in a neutral state. Accordingly, the hydraulic pressure cut-off flag Xvlv is set to "1" (step S510), the hydraulic pressure cut-off valve 36 is turned "ON" (step S512) and the routine ends.

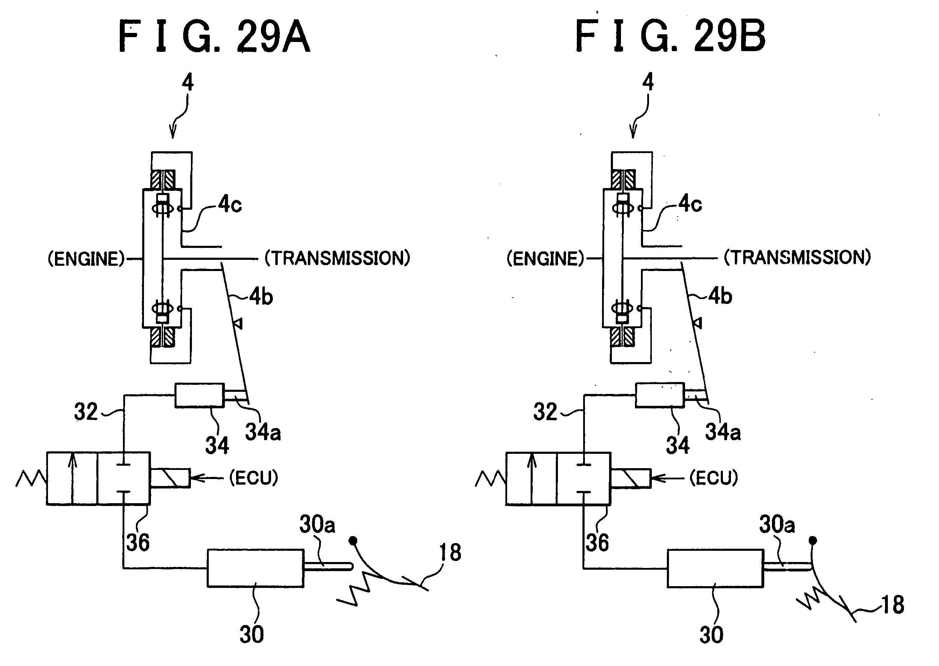

Therefore, the hydraulic pressure path 32 is closed off by the hydraulic pressure cut-off valve 36 as shown in FIGS. 29A and 29B so the clutch 4 does not reflect the operation of the clutch pedal 18. Accordingly, the clutch 4 is kept in the released state even if the driver performs an operation to apply the clutch 4 with the clutch pedal 18, as shown in FIG. 29A, or an operation to release the clutch 4 with the clutch pedal 18, as shown in FIG 29B.

In the next control cycle, after the determination in step S502 is "YES", the determination in step S504 is "NO" because Xvlv is still "1" so it is next determined whether the operation stroke amount PDLST is the maximum value max (step S514). Alternatively, a value slightly less than the maximum value max may be used instead of the maximum value max as a determination value, and it may be determined whether the operation stroke amount PDLST is greater than this determination value.

If PDLST = max (i.e., "YES" in step S514), it is then determined whether NTRL = "OFF" (step S516). Because the shift lever 10 is in the neutral position such that NTRL = "ON" at this time (i.e., "NO" in step S516), the routine ends at this time. Accordingly, the hydraulic pressure cut-off valve 36 remains "ON" and the clutch 4 is kept in the released state.

After shifting the shift lever 10 into the neutral position, the driver then releases the clutch pedal 18. Therefore, the operation stroke amount PDLST becomes less than the maximum value max (i.e., "NO" in step S514) so it is next determined whether NTRL = "OFF" (step S522). Because NTRL is currently "ON" (i.e., "NO" in step S522), the routine ends at this point. Accordingly, the hydraulic pressure cut-off valve 36 is maintained "ON" and the clutch 4 is kept in the released state.

That is, even if the clutch pedal 18 is completely released, as shown in FIG. 29A, the clutch hydraulic pressure cut-off control ECU 38 closes off the hydraulic pressure path 32 with the hydraulic pressure cut-off valve 36 so the hydraulic system from the master cylinder 30 to the release cylinder 34 is fixed in a state where the clutch 4 is released. Therefore, torque from the engine 2 is not transmitted to the transmission 6 so rattling is able to be prevented from occurring without the driver having to apply operating force to the clutch pedal 18.

When the driver depresses the clutch pedal 18 in order to start driving the vehicle and the operation stroke amount PDLST becomes equal to the maximum value max (i.e., "YES" in step S514), it is next determined whether NTRL = "OFF" (step S516). Because the shift lever 10 is still in the neutral position such that NTRL = "ON" at this time (i.e., "NO" in step S516), the routine ends at this point. Accordingly, the hydraulic pressure cut-off valve 36 is maintained "ON" and the clutch 4 is kept in the released state at this stage.

Then when the driver shifts the shift lever 10 from the neutral position into a position for driving the vehicle, or more specifically, when the driver shifts the shift lever 10 into the first speed position or the reverse position, NTRL = "OFF" (i.e., "YES" in step S516), the hydraulic pressure cut-off flag Xvlv is set to "0" (step S518), and the hydraulic pressure cut-off valve 36 is turned "OFF" (step S520).

As a result, the hydraulic pressure cut-off valve 36 opens to allow hydraulic fluid to flow through the hydraulic pressure path 32, thus enabling operation of the clutch pedal 18 to be reflected in the clutch 4. Because the clutch pedal 18 is being depressed at this time, the clutch 4 reflects that operation and stays in the released state.

In the next control cycle, after the determination in step S502 is "YES" and the hydraulic pressure cut-off flag Xvlv has changed back to "0" (i.e., "YES" in step S504), it is then determined whether PDLST = max (step S506). Because the clutch pedal 18 is depressed until PDLST = max (i.e., "YES" in step S506), it is then determined whether NTRL = "ON" (i.e., step S508). Because NTRL = "OFF" at this time (i.e., "NO" in step S508), the routine ends at this point. Accordingly, the hydraulic pressure cut-off valve 36 remains de-energized, i.e., "OFF", such that operation of the clutch pedal 18 is reflected in the clutch 4. As a result, the clutch 4 is kept in the released state.

Then when the driver releases the clutch pedal 18 in order to transmit torque from the engine 2 to the driven wheels 8, the operation stroke amount PDLST becomes less than the maximum value max (i.e., "NO" in step S506) so the hydraulic pressure cut-off valve 36 is maintained in the "OFF" state, thereby reflecting operation of the clutch pedal 18 in the clutch 4 such that the clutch 4 becomes applied. Accordingly, torque is transmitted from the engine 2 to the driven wheels 8 via the clutch 4 and the transmission 6 such that the vehicle takes off.

When the driver applies force to the shift lever 10 for some reason (i.e., "YES" in step S522) when the clutch pedal 18 is released (i.e., "NO" in step S514), the shift lever 10 is in the neutral position (i.e., "NO" in step S522), and the vehicle is stopped, a warning is output just as in step S220 in FIG. 4 (step S524). As a result, the driver is alerted and therefore does not feel a sense of unpleasantness. Then when the driver responds to the warning and returns the shift lever 10 to the neutral position, the output of the warning can be stopped.

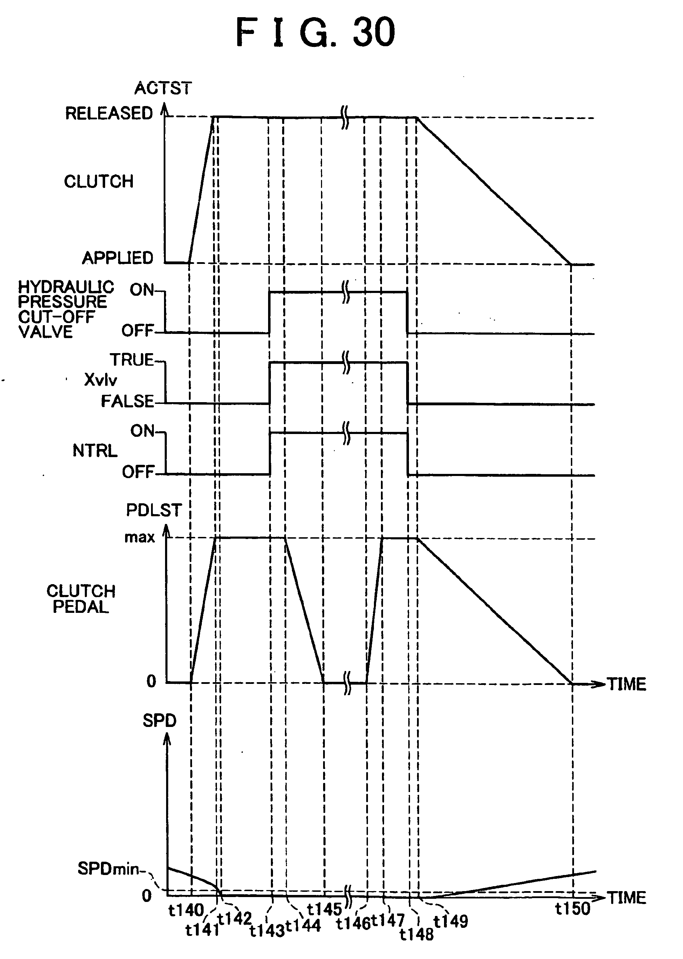

FIGS. 30 to 33 are timing charts showing examples of control according to the exemplary embodiment. FIG. 30 shows an example in which the driver depresses the clutch pedal 18 so as to release the clutch 4, shifts the shift lever 10 into the neutral position, and then releases the clutch pedal 18 when the vehicle is stopped, such as when waiting at a stoplight. First, while the vehicle speed SPD is gradually being reduced by braking, the driver depresses the clutch pedal 18 (from time t140). During this operation, the operation stroke amount PDLST becomes equal to the maximum value max (time t141). At this time, the hydraulic pressure cut-off valve 36 is "OFF" and the operation of the clutch pedal 18 is reflected in the clutch 4. Accordingly, the clutch 4 reflects the operation of the clutch pedal 18 and releases.

Then, SPD ≤ SPDmin (time t142) and the driver shifts the shift lever 10 into the neutral position (i.e., NTRL = "ON") (time t143). As a result, the hydraulic pressure cut-off valve 36 turns "ON" and the clutch 4 is kept in the released state irrespective of an operation of the clutch pedal 18.

Then, because the hydraulic pressure cut-off valve 36 is "ON" despite the fact that the clutch pedal 18 is completely released (time t144 to time t145), the clutch 4 does not reflect the operation of the clutch pedal 18 and remains in the released state. Therefore, the clutch 4 is able to be kept in the released state such that rattling is not generated, without the driver having to apply operating force to the clutch pedal 18.

The driver then depresses the clutch pedal 18 in order to start driving the vehicle and PDLST = max (time t146 to time t147). Because the NTRL = "ON" (i.e., "NO" in step S516 in FIG: 27) at this time, however, the hydraulic pressure cut-off valve 36 is maintained "ON" and the clutch 4 is kept in the released state.

When the shift lever 10 is shifted into a position for driving, NTRL = "OFF" ("YES" in step S516 in FIG. 27 at time t148) and the hydraulic pressure cut-off valve 36 turns back "OFF" (step S520 in FIG. 27) so the hydraulic pressure cut-off valve 36 opens the hydraulic pressure path 32 and thereafter, the operation of the clutch pedal 18 is reflected in the clutch 4. Accordingly, the clutch 4 becomes applied as the operation stroke amount PDLST decreases thereafter.

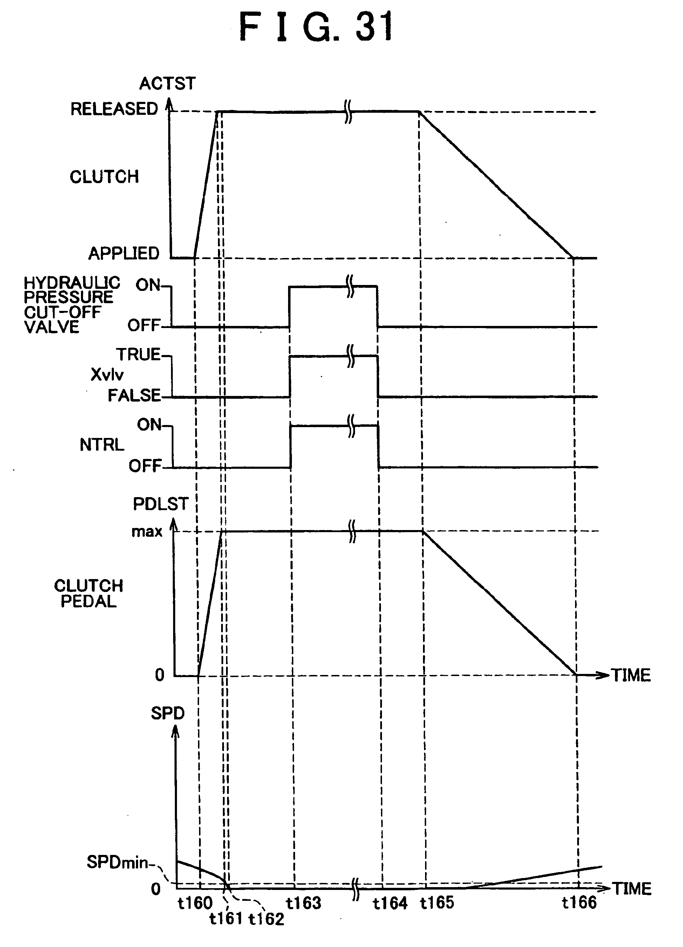

FIG. 31 shows an example in which the driver continues to depress the clutch pedal 18. Time t160 to time t162 in this drawing progresses the same as time t140 to time t142 in FIG. 30. After the vehicle has completely stopped, the driver shifts the shift lever 10 from the second speed position into neutral (time t163) and then into the first speed position all while continuing to depress the clutch pedal 18 (time t164). During this period in which NTRL = "ON", the hydraulic pressure cut-off valve 36 turns "ON" so the operation of the clutch pedal 18 is not reflected in the clutch 4.

Then the driver releases the clutch pedal 18 to start driving the vehicle (time t165 to time t166). Because the hydraulic pressure cut-off valve 36 is "OFF" at this time, the clutch 4 reflects the operation of the clutch pedal 18 and therefore shifts from the released state to the applied state. During this time, the vehicle starts to run.

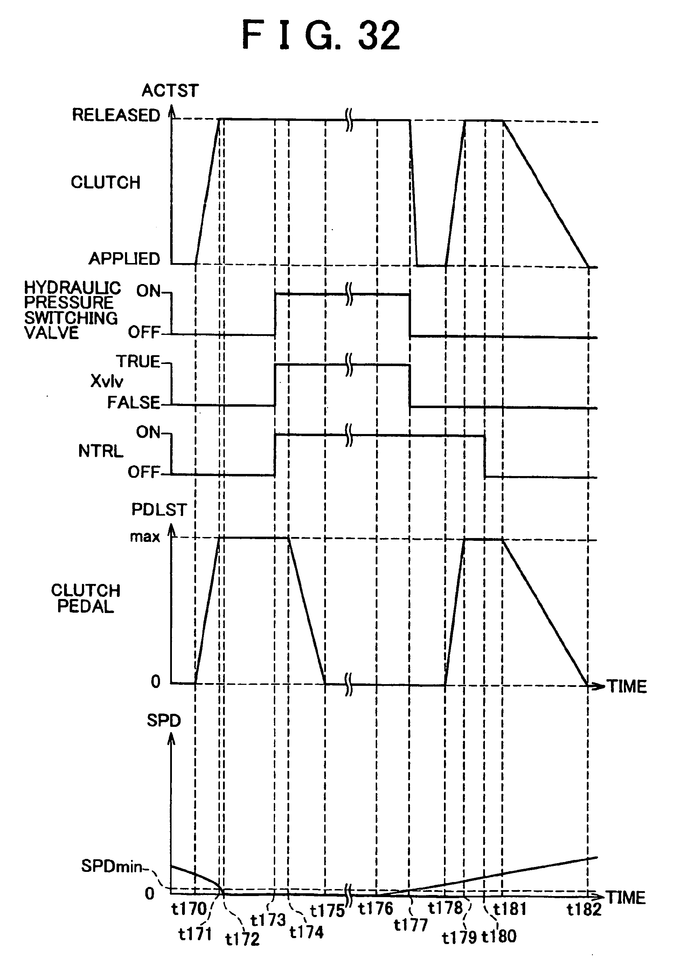

FIG. 32 illustrates a case in which the vehicle takes off from a standstill on a downward slope. Time t170 to time t175 in the drawing progresses the same as time t140 to time t145 in FIG. 30. When the driver releases the brake pedal to drive the vehicle, the vehicle starts to run downhill due to gravitational force. (time t176). When the vehicle speed SPD exceeds the threshold value SPDmin (i.e., "NO" in step S502 in FIG. 27 at time t177), the hydraulic pressure cut-off valve 36 turns "OFF" again (step S520).

As a result, the hydraulic pressure maintained on the release cylinder 34 side is released to the master cylinder 30 side. Because the clutch pedal 18 is already in a released state at this time, the clutch release fork 4b rotates as a result of receiving the urging force from the diaphragm spring 4c, and the push rod 34a of the release cylinder 34 is pushed back. Accordingly, the state of the vehicle control apparatus changes from that shown in FIG. 29A to that shown in FIG. 28A, with the push rod 30a of the master cylinder 30 abutting against the clutch pedal 18.

Then the driver depresses the clutch pedal 18 (time t178 to time t179) so as to release the clutch 4 and shifts the shift lever 10 into the first speed position (time t180). The clutch 4 is then applied by releasing the clutch pedal 18 (time t181 to time t182).

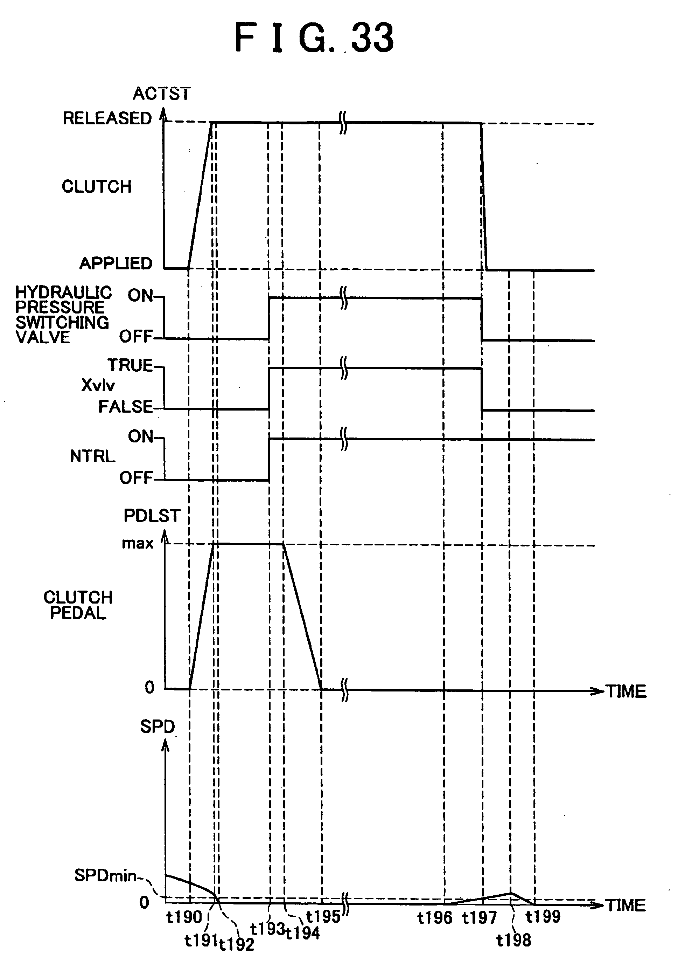

FIG. 33 illustrates a case in which the vehicle which started to run on a downward slope is stopped again. Time t190 to time t195 in the drawing progresses the same as time t140 to time t145 in FIG. 30. When the vehicle starts to run forward from a stopped state due to the brake being released (time t196) and the vehicle speed SPD exceeds the threshold value SPDmin. (i.e., "NO" in step S502 in FIG. 27 at time t197), the hydraulic pressure cut-off valve 36 turns back "OFF" (step S520). Therefore, the clutch 4 is applied so as to reflect the state of the clutch pedal 18 as described in FIG. 32. Accordingly, the rotation of the engine 2 is transmitted to the transmission 6 via the clutch 4. Then when the driver realizes that the vehicle is starting to run, he or she can stop the vehicle by depressing the brake pedal (time t198 to time t199).

In the foregoing construction, the master cylinder 30, the hydraulic pressure path 32, and the release cylinder 34 correspond to the clutch pedal reflecting means. Further, the routine for controlling the clutch hydraulic pressure cut-off valve (FIG. 27) executed by the clutch hydraulic pressure cut-off control ECU 38 using the hydraulic pressure cut-off valve 36 corresponds to processes of the clutch-released maintaining means and the warning means.

The following effects are obtained with the sixth exemplary embodiment described above.
a) The same effects as a), b), c), d), and f) in the first exemplary embodiment are obtained.
b) In this exemplary embodiment, the clutch pedal 18 is hydraulically linked to the clutch 4. With this type of a hydraulic clutch as well, providing the hydraulic pressure cut-off valve 36 enables the operation of the clutch pedal 18 to either be reflected or not reflected in the clutch 4.

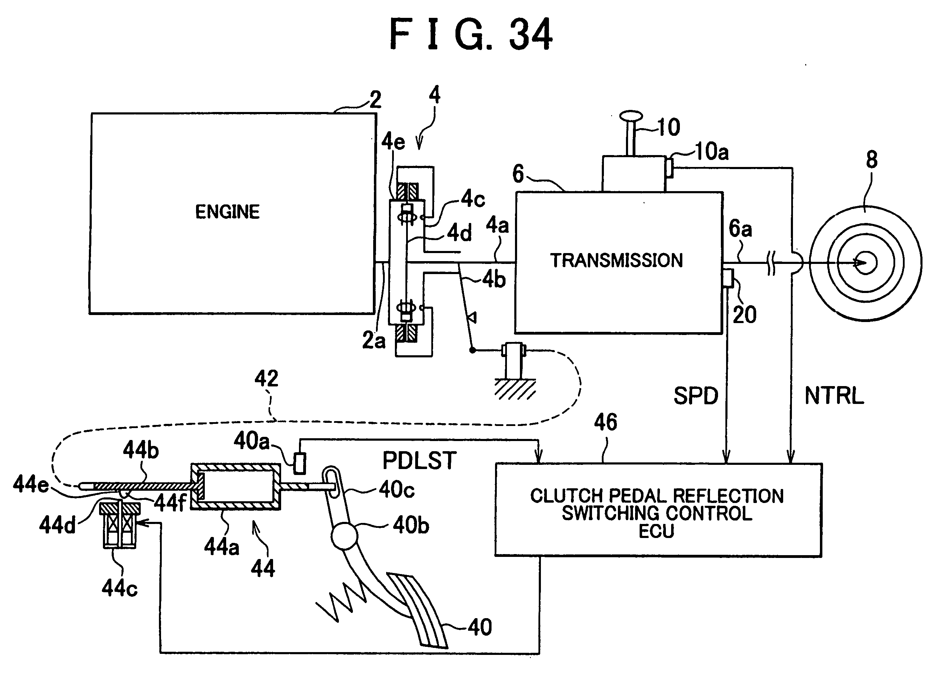

Next, a vehicle control apparatus according to a seventh exemplary embodiment of the invention will be described.
In this exemplary embodiment, a mechanical clutch driving mechanism shown in FIG. 34 is provided instead of the hydraulic clutch driving mechanism of the sixth exemplary embodiment. The structure in this drawing that is the same as the structure in FIG. 1 will be denoted with the same reference numerals and characters, and descriptions thereof will be omitted.

This clutch driving mechanism is a mechanical clutch driving mechanism that transmits operating force applied to a clutch pedal 40 by the driver to the clutch 4 via a wire 42 instead of converting that operating force into an electrical signal or hydraulic pressure. That is, the operating force on the clutch pedal 40 turns the clutch release fork 4b with the wire 42. Accordingly, the pressure on the clutch diaphragm spring 4c is adjusted so as to release or apply the clutch 4.

The clutch pedal 40 is connected to the wire 42 via a clutch pedal reflection adjusting mechanism 44 at a driving portion 40c which is opposite a rotational support portion 40b. The clutch pedal reflection adjusting mechanism 44 includes a cylindrical rod receiver portion 44a, a connecting rod 44b, one end of which has a T-shaped cross-section and is inserted into the rod receiver portion 44a, and an electromagnetic retainer driving portion 44c which is disposed along the connecting rod 44b. The electromagnetic retainer driving portion 44c is constructed such that, when energized (i.e., turned "ON") by the clutch pedal reflection switching control ECU 46, the retaining rod 44d protrudes toward the connecting rod 44b, and when de-energized (i.e., turned "OFF"), the retaining rod 44d returns by an internal spring.

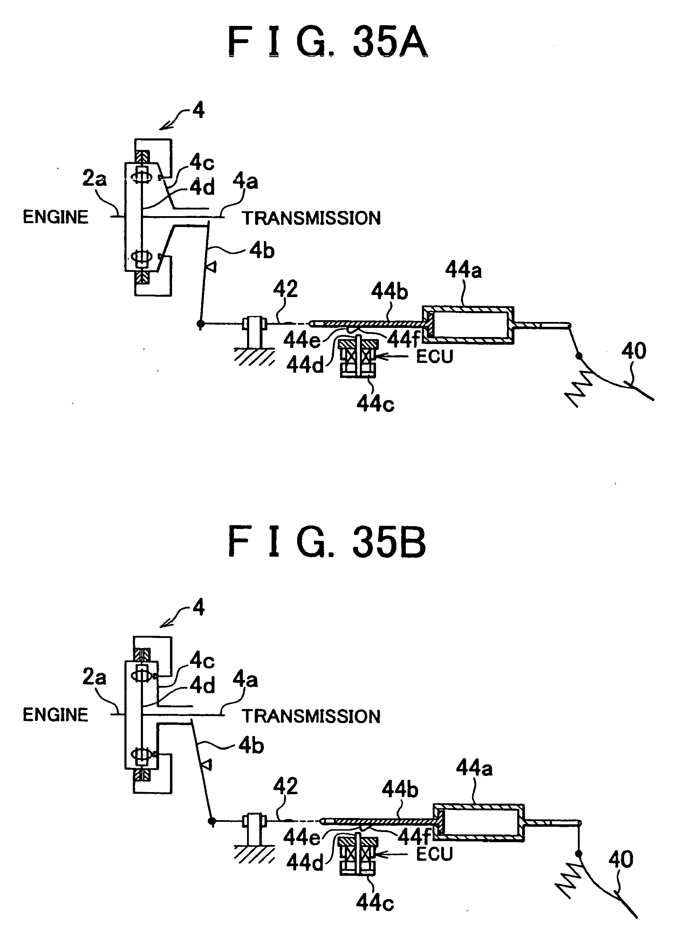

The connecting rod 44b has a retaining protrusion 44f which has a retaining face 44e on the side opposite the clutch pedal 40. As shown in FIG. 35, when the retaining rod 44d of the electromagnetic retainer driving portion 44c is not protruding outward, the retaining face 44e of the retaining protrusion 44f does not abut against the retaining rod 44d so the connecting rod 44b can move according to the operation of the clutch pedal 40. That is, when the clutch pedal 40 is released, as shown in FIG. 35A, the clutch release fork 4b does not bend the diaphragm spring 4c so the clutch 4 is applied. When the clutch pedal 40 is depressed, as shown in FIG. 35B, the clutch release fork 4b bends the diaphragm spring 4c so that the clutch 4 is released.

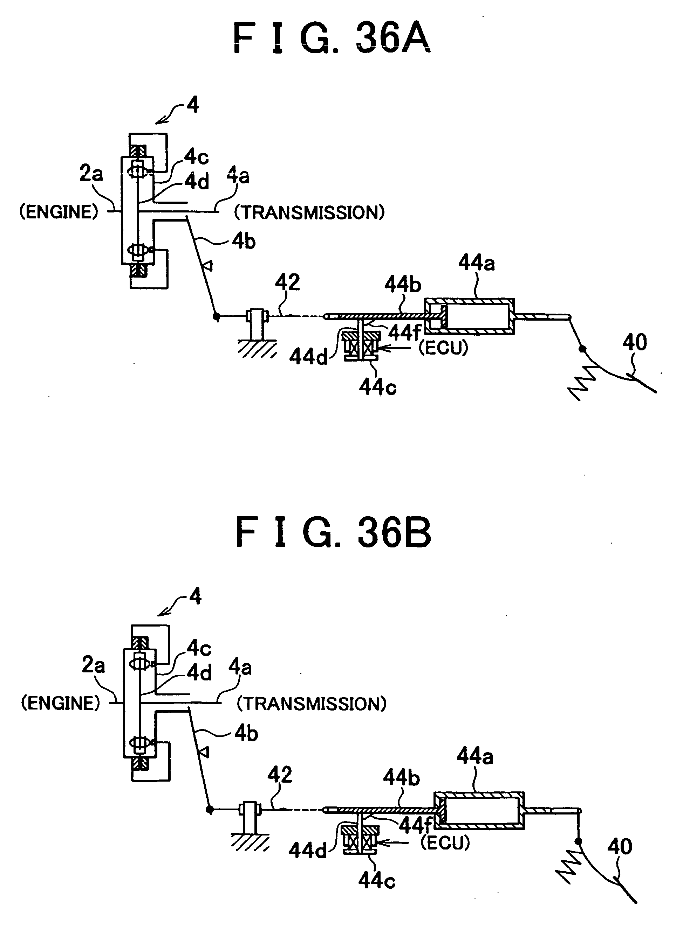

As shown in FIGS. 36A and 36B, when the electromagnetic retainer driving portion 44c is energized such that the retaining rod 44d is protruding, the retaining face 44e of the retaining protrusion 44f abuts against the retaining rod 44d, thus preventing the connecting rod 44b from moving according to operation of the clutch pedal 40. That is, as shown in FIG. 36A, even if the clutch pedal 40 is released, the connecting rod 44b is prevented from moving toward the clutch 4 side by the retaining rod 44d such that the movement of the rod receiver portion 44a is not reflected in the connecting rod 44b. Therefore, the clutch release fork 4b is maintained in a state in which it bends the diaphragm spring 4c, such that the clutch 4 is kept in the released state regardless of operation of the clutch pedal 40. FIG. 36B shows an example in which the clutch pedal 40 is being depressed. In this case, as well, the clutch 4 is in the released state.

The clutch pedal reflection switching control ECU 46 is constructed as an electronic control circuit, the main component of which is a microcomputer that includes ROM, RAM, an interface circuit, and a driver circuit. The clutch pedal reflection switching control ECU 46 inputs the detection results of the operation stroke amount PDLST from an operation stroke sensor 40a, the vehicle speed SPD from the vehicle speed sensor 20, and the neutral position NTRL from the neutral switch 10a.

The clutch pedal reflection switching control ECU 46 then executes a calculation process according to a program written in the ROM based on those signals, and energizes or de-energizes the electromagnetic retainer driving portion 44c using the driving current so as to either enable or interrupt transmission of the operating force of the clutch pedal 40 by the clutch pedal reflection adjusting mechanism 44. This process is similar to the process for controlling the clutch hydraulic pressure cut-off valve described in FIG. 27 of the sixth exemplary embodiment. However, in steps S512 and S520, the electromagnetic retainer driving portion 44c is driven instead of the hydraulic pressure cut-off valve 36.

Accordingly, the clutch 4 is made to reflect, or not reflect, the operation of the clutch pedal 40, just as in the sixth exemplary embodiment. In the foregoing construction, the clutch pedal reflection adjusting mechanism 44 and the wire 42 correspond to the clutch pedal reflecting means. Also, the process in FIG. 27 that is executed by the clutch pedal reflection switching control ECU 46 using the electromagnetic retainer driving portion 44c corresponds to the process of the clutch-released maintaining means and the warning means.

Hereinafter, effects obtained from the seventh exemplary embodiment will be described.
a) The effects of a), b), c), d), and f) of the first exemplary embodiment are obtained.

b) In this exemplary embodiment, operation of the clutch pedal 40 is reflected mechanically in the clutch 4 by the wire 42. Providing the clutch pedal reflection adjusting mechanism 44 in this type of mechanical clutch enables operation of the clutch pedal 40 to be either reflected or not reflected in the clutch 4.

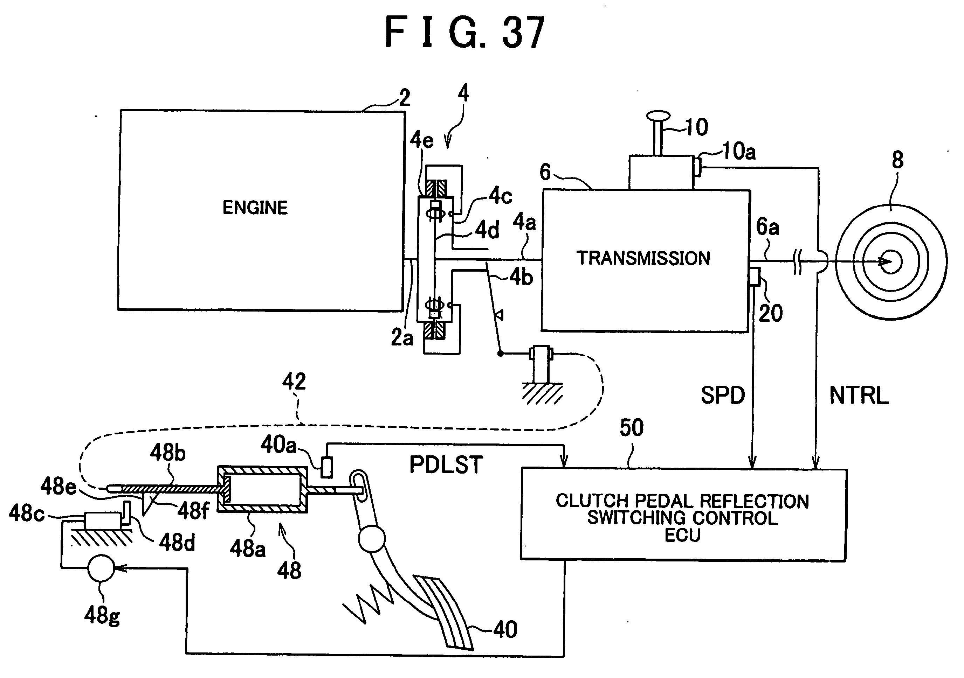

Hereinafter, a vehicle control apparatus according to an eighth exemplary embodiment of the invention will be described.
In this exemplary embodiment, a clutch pedal reflection adjusting mechanism 48 shown in FIG. 37 is provided instead of the clutch pedal reflection adjusting mechanism 44 of the seventh exemplary embodiment. The structure in this drawing that is the same as the structure in FIG. 7 will be denoted with the same reference numerals and characters, and descriptions thereof will be omitted.

The construction of the clutch pedal reflection adjusting mechanism 48 in this clutch driving mechanism differs from that of the seventh exemplary embodiment. The clutch pedal reflection adjusting mechanism 48 includes a cylindrical rod receiving portion 48a, a connecting rod 48b, a released-state maintaining portion 48c, and an electric motor 48g. The connecting rod 48b is formed such that one end thereof has a T-shaped cross-section which is inserted into the rod receiving portion 48a. On the connecting rod 48b is also formed a retaining protrusion 48f. The released-state maintaining portion 48c is arranged along the connecting rod 48b. A holding rod 48d is provided in the released-state maintaining portion 48c so as to be able to protrude therefrom. The rod receiving portion 48a and the connecting rod 48b have generally the same shapes as in the seventh exemplary embodiment.

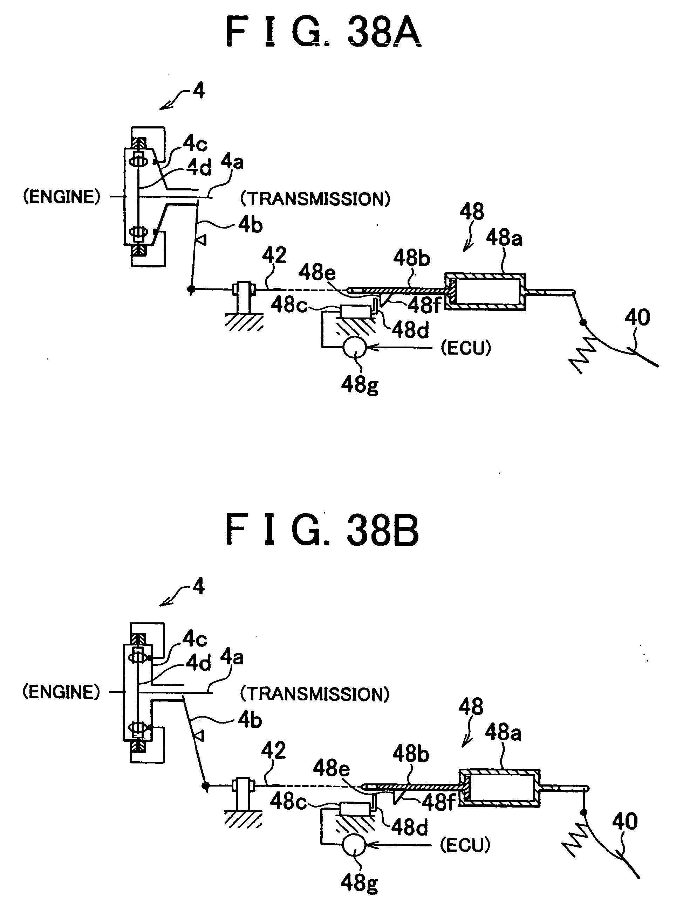

When the released-state maintaining portion 48c is de-energized (i.e., "OFF"), the holding rod 48d is not protruding, as shown in FIGS. 38A and 38B, due to urging force applied thereto by an internal spring. Therefore, the connecting rod 48b is prevented from moving both when the clutch pedal 40 is not being depressed, as shown in FIG. 38A, as well as when the clutch pedal 40 is being depressed, as shown in FIG. 38B.

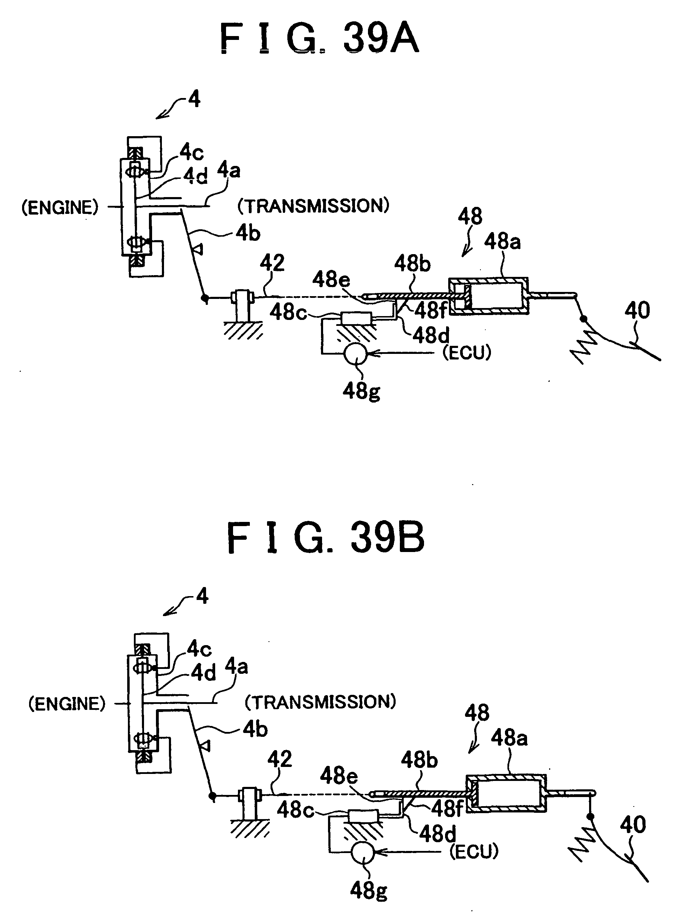

However, when the electric motor 48g receives a command from a clutch pedal reflection switching control ECU 50 and drives the released-state maintaining portion 48c (i.e., "ON"), the holding rod 48d protrudes out in a direction parallel with the connecting rod 48b, as shown in FIGS. 39A and 39B, and abuts against a retaining face 48e of the retaining protrusion 48f formed on the connecting rod 48b. At this time, if the driver is not completely depressing the clutch pedal 40, the released-state maintaining portion 48c forces the connecting rod 48b toward the clutch pedal 40 side, as shown in FIG. 39A, to the position that it would be in if the clutch pedal 40 were completely depressed. FIG. 39B shows an example of when the clutch pedal 40 is completely depressed. The released-state maintaining portion 48c is able to keep the clutch 4 is the released state regardless of the operating state of the clutch pedal 40.

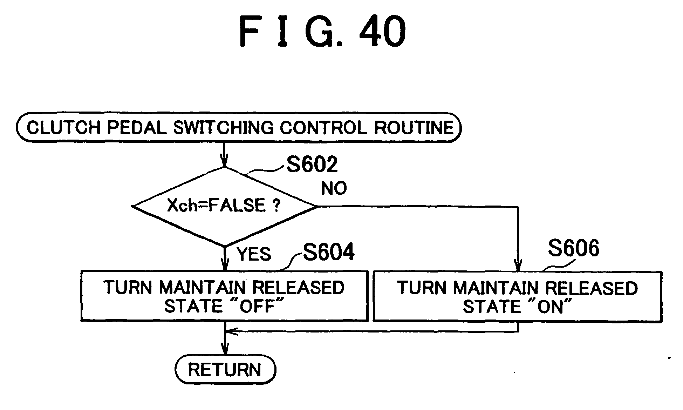

The clutch pedal reflection switching control ECU 50 executes reflection switching control shown in FIG. 40. Further, the clutch pedal reflection switching control ECU 50 executes the clutch control flag Xch setting routine (FIG. 4) described in the first exemplary embodiment or any one of the clutch control flag Xch setting routines A and B (FIGS. 9, 10, 17, 19, and 20) described in the second through the fifth exemplary embodiments.

Next, the reflection switching control (FIG. 40) will be described. This routine is executed with the same control cycle as the clutch driving routine (FIG. 2). When this routine starts, it is first determined whether the clutch control flag Xch is "0" (step S602). The clutch control flag Xch is a flag that is set by the clutch control flag Xch setting routine (FIG. 4) or the clutch control flag Xch setting routine A or B (FIGS. 9, 10, 17, 19, and 20).

If Xch = "0" 'i.e., "YES" in step S602), "maintain released state" is turned "OFF" (step S604). That is, the clutch pedal reflection switching control ECU 50 puts the holding rod 48d of the released-state maintaining portion 48c in a non-protruding state, as shown in FIGS. 38A and 38B, thereby enabling the wire 42 to move by the operation of the clutch pedal 40. Accordingly, the clutch 4 reflects operation of the clutch pedal 40 and can therefore be applied or released according to an operation by the driver.

On the other hand, if Xch = "1" (i.e., "NO" in step S602), "maintain released state" is turned "ON" (step S606). That is, the clutch pedal reflection switching control ECU 50 makes the holding rod 48d of the released-state maintaining portion 48c protrude, as shown in FIG. 39, and moves the wire 42 to the same position that it would be in if the clutch pedal 40 were completely depressed. Accordingly, operation of the clutch pedal 40 is not reflected in the clutch 4 and the clutch 4 is maintained in the released state.

In this way, a process is performed that reflects, or does not reflect, operation of the clutch pedal 40 in the clutch 4 according to the state of the clutch control flag Xch set by either the clutch control flag Xch setting routine (FIG. 4) or the clutch control flag Xch setting routines A and B (FIGS. 9, 10, 17, 19, and 20).

In the foregoing construction, the clutch pedal reflection adjusting mechanism 48 and the wire 42 correspond to the clutch pedal reflecting means. Also, step S606 in FIG. 40 executed by the clutch pedal reflection switching control ECU 50 using the electric motor 48g and the released-state maintaining portion 48c, and the clutch control flag Xch setting routine (FIG. 4) or the clutch control flag Xch setting routines A and B (FIGS. 9, 10, 17, 19, and 20) correspond to the processes of the clutch-released maintaining means and the warning means.

The following effects can be obtained from the eighth exemplary embodiment.
a) Effects the same as those of any of the first to the fifth exemplary embodiments can be obtained with the exception of e) of the first exemplary embodiment.
b) The effect of b) in the seventh exemplary embodiment can be obtained.

### [Other exemplary embodiments]

(a) In the first to the fifth exemplary embodiments, the clutch 4 is controlled by the clutch-by-wire ECU 16 between a state in which it reflects operation of the clutch pedal 18 and a state in which it does not reflect operation of the clutch pedal 18 and is maintained in a released state.

Alternatively, the clutch-by-wire ECU 16 may also execute an automatic clutch mode during take-off of the vehicle. According to this automatic clutch mode, the clutch-by-wire ECU 16 executes control (corresponding to the process of automatic clutch controlling means) which shifts the clutch 4 from the released state to the applied state and executes a smooth take-off by the driver only operating the accelerator pedal while the clutch pedal 18 remains released.

If this kind of automatic clutch mode is employed, the warning output process of step S220 in the clutch control flag Xch setting routine (FIG. 4) and steps S368 and S436 in the clutch control flag Xch setting routine B (FIGS. 10 and 20) may be replaced by a process for changing to the automatic clutch mode. Accordingly, when the shift lever 10 is shifted from the neutral position to a shift position for driving, it is possible to estimate when the driver is attempting to start driving and the vehicle can be made to take off according to an accelerator operation. After take-off, it is possible to return to clutch control for reflecting operation of the clutch pedal 18 in the clutch 4 after the clutch control flag Xch is changed back to "0".

If the automatic clutch control is executed in this way, the driver is aware of the fact that the clutch is automatically applied and released. Accordingly, when shifting the shift lever 10 from the neutral position to a position for driving the vehicle, the driver can anticipate that automatic clutch control will be performed even if he or she does not operate the clutch 4. Therefore, a sense of unpleasantness will not be imparted on the driver even if the operation of clutch pedal 18 by the driver does not match the actual state of the clutch 4.

Also, the automatic clutch control operates when the shift lever 10 is shifted from the neutral position to a position for driving the vehicle. Accordingly, gear engagement in the transmission 6 is reliably prevented when the clutch 4 is applied so the fear of damage to the transmission can be minimized or eliminated.

In this case, steps S220, S368, and S436 correspond to processes of the automatic clutch control starting means.
(b) When detecting a shift of the shift lever 10 into a shift position for driving, instead of determining whether the neutral position NTRL is "ON" or "OFF" in FIGS. 4, 10 and 20, it may be determined whether the shift lever 10 is being shifted between a non-driving position and a driving position according to whether a driving shift position signal is "ON" or "OFF". Alternatively, both of these determinations may be used.
(c) Instead of the warning output process of step S220 in the clutch control flag Xch setting routine (FIG. 4) and steps S368 and S436 in the clutch control flag Xch setting routine B (FIGS. 10 and 20), the clutch control flag Xch may also be set to "0". Also, instead of the warning output process of step S524 in the clutch hydraulic pressure cut-off valve control routine (FIG. 27), the hydraulic pressure cut-off valve 36 may be also set to "OFF". In this case, the clutch 4 is applied and the input side gear in the transmission 6 is rotated immediately after the shift lever 10 is shifted out of the neutral position. Therefore, a gear grinding noise is generated in the transmission 6 so the driver is made aware of the fact that the shift lever 10 can not be shifted into a shift position for driving.

Both the warning output process and either the process for setting the clutch control flag Xch to "0" or setting the hydraulic pressure cut-off valve 36 to "OFF" may be executed.
(d) Instead of the electromagnetic retainer driving portion 44c in the seventh exemplary embodiment, a mechanical actuator driven by an electric motor or an actuator using hydraulic pressure or pneumatic pressure may be used. Instead of the released-state maintaining portion 48c in the eighth exemplary embodiment, an electromagnetic actuator or an actuator using hydraulic pressure or pneumatic pressure may be used.
(e) For the clutch, the example given is one in which a dry-operating single disc friction clutch is used. Alternatively, however, a multiple-disc friction clutch, wet-operating friction clutch, or electromagnetic clutch, for example, may also be used. Also, in the exemplary embodiments, application of the clutch is performed using the spring force of a diaphragm spring. Alternatively, however, application of the clutch may also be performed using the spring force of a coil spring.
(f) In each of the foregoing exemplary embodiments, the transmission used is a manual gear transmission. In this case, the neutral position corresponds to a non-driving position, and a shift position for driving, such as the first speed shift position or the reverse shift position, corresponds to a driving position, i.e., a shift position for driving. Further, the invention may also apply to an automatic transmission so far as the transmission is provided with internal gears. In this case, the neutral range or park range selected by a selection lever corresponds to the non-driving position and any other range corresponds to a driving position. Accordingly, the neutral position NTRL determination is such that NTR = "ON" when the selection lever is shifted into the neutral range or the park range, and NTR = "OFF" when the selection lever is shifted into any other range.

Also, the transmission may be a type that switches gear speeds or ranges by a switch or the like, without being dependent upon a shift lever.
(g) In each of the foregoing exemplary embodiments, a hydraulic fluid temperature sensor that detects the temperature of the hydraulic fluid inside the transmission may be further provided and execution of the processes (step S 106 in FIG. 2, step S512 in FIG. 27, and step S606 in FIG. 40) that keep the clutch 4 in the released state may be prohibited when the temperature of the hydraulic fluid is low. Accordingly, hydraulic fluid is circulated inside the transmission when its temperature is low, thus enabling the temperature of the hydraulic fluid to be increased rapidly so as to reduce friction in the transmission early on.

## Claims

1. A vehicle control apparatus provided with a clutch (4) which is disposable midway in a power transmission path by which power is transmitted from a driving source (2) driving a vehicle to a transmission (6) which selectively enables and interrupts transmission of that power, a clutch operating portion (18) operated by a driver, clutch operating portion reflecting means (16) configured to reflect an operation of the clutch operating portion (18) in the clutch (4), wherein the operation of the clutch operating portion (18) is reflected in the clutch (4) when the clutch (4) is made to engage in accordance with an operation of the clutch operating portion (18), and a shift instructing portion (10) which is operated by the driver and which instructs the transmission to shift,
further comprising:
vehicle stopped state detecting means (20) configured to detect a stopped state of the vehicle,
shift instruction detecting means (10a) configured to detect an instructing state of the shift instructing portion (10),
clutch operation detecting means (18a) configured to detect an operating state of the clutch operating portion (18), and
clutch-released maintaining means (16) configured, when a) the vehicle stopped state detecting means (20) has detected that the vehicle is stopped, b) the shift instruction detecting means (10a) has detected that the shift instructing portion (10) is being put in a non-driving position, and c) the clutch operation detecting means (18a) has detected an operation to release the clutch (4), to stop reflection of the operation of the clutch operating portion (18) in the clutch (4) by the clutch operating portion reflecting means (16), wherein when the reflection of the operation of the clutch operating portion (18) is stopped the clutch (4) is made to remain in a disengaged state regardless of whether the clutch operating portion (18) is released, and to maintain the clutch (4) in a released state from after a condition for stopping reflection of the operation of the clutch operating portion (18) in the clutch (4) has been fulfilled when the clutch operation detecting means (18a) has detected an operation to switch the clutch (4) from a released state to an applied state or an operation to apply the clutch (4), until a condition for reflecting operation of the clutch operating portion (18) in the clutch (4) again has been fulfilled, wherein the condition for reflecting the operation of the clutch operating portion (18) in the clutch (4) again is fulfilled by both detection by the clutch operation detecting means of the operation to release the clutch (4) in condition c) being switched once to an operation to apply the clutch (4) and then back to the operation to release the clutch (4), and detection by the shift instruction detecting means (10a) of the shift instructing portion (10) being shifted out of the non-driving position or into a driving position.

2. The vehicle control apparatus according to claim 1, wherein the condition for reflecting the operation of the clutch operating portion (18) in the clutch (4) again is fulfilled by the vehicle having started to be driven.

3. The vehicle control apparatus according to any one of claims 1 and 2, further comprising:
warning means (16) configured to output a warning with respect to a shift instruction when the shift instruction detecting means (10a) has detected that the shift instructing portion (10) is being shifted out of the non-driving position or into a driving position when the clutch-released maintaining means (16) is stopping reflection of the operation of the clutch operating portion (18) in the clutch (4) by the clutch operating portion reflecting means (16) and is maintaining the clutch (4) in the released state.

4. The vehicle control apparatus according to any one of claims 1 and 2, further comprising:
automatic clutch controlling means configured to automatically apply and release the clutch (4) based on a driving condition of an automatic clutch, and
automatic clutch control starting means configured to operate the automatic clutch controlling means when the shift instruction detecting means (10a) has detected that the shift instructing portion (10) is being shifted out of the non-driving position or into a driving position when the clutch-released maintaining means (16) is stopping reflection of the operation of the clutch operating portion (18) in the clutch (4) by the clutch operating portion reflecting means (16) and is maintaining the clutch (4) in the released state.

5. The vehicle control apparatus according to any one of claims 1 to 4, wherein the clutch operating portion reflecting means (16) is configured to reflect operation of the clutch operating portion (18) in the clutch (4) by electrically connecting the clutch operating portion (18) and the clutch (4).

6. The vehicle control apparatus according to any one of claims 1 to 5, wherein, when the driver applies operating force to the clutch operating portion (18), the clutch operating portion (18) is configured to output a signal to the clutch (4) so that the clutch (4) is made to be in the released state, and when the driver does not apply operating force to the clutch operating portion (18), the clutch operating portion (18) is configured to output a signal to the clutch (4) so that the clutch (4) is made to be in the applied state.

7. The vehicle control apparatus according to claim 1, wherein the clutch operating portion reflecting means (16) is configured to reflect an operation of the clutch operating portion (18) in the clutch if the clutch operating portion (18) is depressed more than a threshold value.

8. The vehicle control apparatus according to claim 1, wherein the clutch operating portion reflecting means (16) is configured to reflect an operation of the clutch operating portion (18) in the clutch again if a vehicle speed becomes greater than a threshold value (SPDmin).

## Patentansprüche

1. Fahrzeugsteuerungsgerät, das mit einer Kupplung (4), die mitten in einem Leistungsübertragungsweg anordenbar ist, durch den Leistung von einer Antriebsquelle (2), die ein Fahrzeug antreibt, zu einem Getriebe (6) übertragen wird, das selektiv eine Übertragung dieser Leistung ermöglicht und unterbricht, einem Kupplungsbetätigungsabschnitt (18), der durch einen Fahrer betätigt wird, einer Kupplungsbetätigungsabschnittreflektiereinrichtung (16), die konfiguriert ist, eine Betätigung des Kupplungsbetätigungsabschnitts (18) in der Kupplung (4) zu reflektieren, wobei die Betätigung des Kupplungsbetätigungsabschnitts (18) in der Kupplung (4) reflektiert wird, wenn die Kupplung (4) veranlasst wird, entsprechend einer Betätigung des Kupplungsbetätigungsabschnitts (18) einzukuppeln wird, und einem Schaltungsanweisungsabschnitt (10) versehen ist, der durch den Fahrer betätigt wird und der das Getriebe anweist zu schalten,
ferner mit:
einer Fahrzeugstoppzustanderfassungseinrichtung (20), die konfiguriert ist, einen gestoppten Zustand des Fahrzeugs zu erfassen,
einer Schaltungsanweisungserfassungseinrichtung (10a), die konfiguriert ist, einen Anweisungszustand des Schaltungsanweisungsabschnitts (10) zu erfassen,
einer Kupplungsbetätigungserfassungseinrichtung (18a), die konfiguriert ist, einen Betätigungszustand des Kupplungsbetätigungsabschnitts (18) zu erfassen, und
einer Einrichtung zur Beibehaltung eines Auskuppelzustands (16), die konfiguriert ist, wenn a) die Fahrzeugstoppzustanderfassungseinrichtung (20) erfasst hat, dass das Fahrzeug gestoppt ist, b) die Schaltungsanweisungserfassungseinrichtung (10a) erfasst hat, dass der Schaltungsanweisungsabschnitt (10) in eine Nicht-Fahrposition gesetzt worden ist, und c) die Kupplungsbetätigungserfassungseinrichtung (18a) eine Betätigung zum Freigeben der Kupplung (4) erfasst hat, ein Reflektieren der Betätigung des Kupplungsbetätigungsabschnitts (18) in der Kupplung (4) durch die Kupplungsbetätigungsabschnittreflektiereinrichtung (16) zu stoppen, wobei, wenn das Reflektieren der Betätigung des Kupplungsbetätigungsabschnitts (18) gestoppt ist, die Kupplung (4) veranlasst wird, in einem ausgekuppelten Zustand unabhängig davon zu bleiben, ob der Kupplungsbetätigungsabschnitt (18) freigegeben ist, und die Kupplung (4) in einem freigegebenen Zustand von einem Zeitpunkt zu halten, nachdem eine Bedingung zum Stoppen eines Reflektierens der Betätigung des Kupplungsbetätigungsabschnitts (18) in der Kupplung (4) erfüllt worden ist, wenn die Kupplungsbetätigungserfassungseinrichtung (18a) eine Betätigung, um die Kupplung (4) von einem freigegebenen Zustand in einen angewendeten Zustand zu schalten, oder eine Betätigung erfasst hat, die Kupplung (4) anzuwenden, bis eine Bedingung zum Reflektieren einer Betätigung des Kupplungsbetätigungsabschnitts (18) in der Kupplung (4) wieder erfüllt worden ist, wobei die Bedingung für ein Reflektieren der Betätigung des Kupplungsbetätigungsabschnitts (18) in der Kupplung (4) wieder erfüllt ist durch sowohl eine Erfassung durch die Kupplungsbetätigungserfassungseinrichtung der Betätigung zum Freigeben der Kupplung (4) in der Bedingung c), die einmal zu einer Betätigung zum Anwenden der Kupplung (4) und dann zurück zu der Betätigung zum Freigeben der Kupplung (4) geschaltet wird, als auch eine Erfassung durch die Schaltungsanweisungserfassungseinrichtung (10a), dass der Schaltungsanweisungsabschnitt (10) aus der Nicht-Fahrposition in eine Fahrposition geschaltet wird.

2. Fahrzeugsteuerungsgerät nach Anspruch 1, wobei die Bedingung zum Reflektieren der Betätigung des Kupplungsbetätigungsabschnitts (18) in der Kupplung (4) wieder dadurch erfüllt ist, dass das Fahrzeug gestartet worden ist, um gefahren zu werden.

3. Fahrzeugsteuerungsgerät nach einem der Ansprüche 1 und 2, ferner mit:
einer Warneinrichtung (16), die konfiguriert ist, eine Warnung in Bezug auf eine Schaltungsanweisung auszugeben, wenn die Schaltungsanweisungserfassungseinrichtung (10a) erfasst hat, dass der Schaltungsanweisungsabschnitt (10) aus der Nicht-Fahrposition oder in eine Fahrposition geschaltet wird, wenn die Einrichtung zur Beibehaltung des Auskuppelzustands (16) ein Reflektieren der Betätigung des Kupplungsbetätigungsabschnitts (18) in der Kupplung (4) durch die Kupplungsbetätigungsabschnittreflektiereinrichtung (16) stoppt und die Kupplung (4) in dem freigegebenen Zustand hält.

4. Fahrzeugsteuerungsgerät nach einem der Ansprüche 1 und 2, ferner mit:
einer Automatikkupplungssteuerungseinrichtung, die konfiguriert ist, die Kupplung (4) auf der Grundlage einer Antriebsbedingung einer Automatikkupplung automatisch anzuwenden und freizugeben, und
einer Automatikkupplungssteuerungsstarteinrichtung, die konfiguriert ist, die Automatikkupplungssteuerungseinrichtung zu betreiben, wenn die Schaltungsanweisungserfassungseinrichtung (10a) erfasst hat, dass der Schaltungsanweisungsabschnitt (10) aus der Nicht-Fahrposition oder in eine Fahrposition geschaltet wird, wenn die Einrichtung zur Beibehaltung des Auskuppelzustands (16) ein Reflektieren der Betätigung des Kupplungsbetätigungsabschnitts (18) in der Kupplung (4) durch die Kupplungsbetätigungsabschnittreflektiereinrichtung (16) stoppt und die Kupplung (4) in dem freigegebenen Zustand hält.

5. Fahrzeugsteuerungsgerät nach einem der Ansprüche 1 bis 4, wobei die Kupplungsbetätigungsabschnittreflektiereinrichtung (16) konfiguriert ist, eine Betätigung des Kupplungsbetätigungsabschnitts (18) in der Kupplung (4) zu reflektieren, indem der Kupplungsbetätigungsabschnitt (18) und die Kupplung (4) elektrisch verbunden werden.

6. Fahrzeugsteuerungsgerät nach einem der Ansprüche 1 bis 5, wobei, wenn der Fahrer eine Betätigungskraft auf den Kupplungsbetätigungsabschnitt (18) aufbringt, der Kupplungsbetätigungsabschnitt (18) konfiguriert ist, ein Signal an die Kupplung (4) auszugeben, sodass die Kupplung (4) veranlasst wird, in dem freigegebenen Zustand zu sein, wobei, wenn der Fahrer keine Betätigungskraft auf den Kupplungsbetätigungsabschnitt (18) aufbringt, der Kupplungsbetätigungsabschnitt (18) konfiguriert ist, ein Signal an die Kupplung (4) auszugeben, sodass die Kupplung (4) veranlasst wird, in dem angewendeten Zustand zu sein.

7. Fahrzeugsteuerungsgerät nach Anspruch 1, wobei die Kupplungsbetätigungsabschnittreflektiereinrichtung (16) konfiguriert ist, eine Betätigung des Kupplungsbetätigungsabschnitts (18) in der Kupplung zu reflektieren, wenn der Kupplungsbetätigungsabschnitt (18) mehr als einen Schwellenwert niedergedrückt wird.

8. Fahrzeugsteuerungsgerät nach Anspruch 1, wobei die Kupplungsbetätigungsabschnittreflektiereinrichtung (16) konfiguriert ist, eine Betätigung des Kupplungsbetätigungsabschnitts (18) in der Kupplung wieder zu reflektieren, wenn eine Fahrzeuggeschwindigkeit größer als ein Schwellenwert (SPDmin) wird.

## Revendications

1. Appareil de commande de véhicule équipé d'un embrayage (4) qui est disposé à mi-chemin dans un trajet de transmission de puissance par lequel la puissance est transmise d'une source d'entraînement (2) entraînant un véhicule à une transmission (6) qui permet et interrompt sélectivement la transmission de cette puissance, une partie d'actionnement d'embrayage (18) actionné par un conducteur, un moyen de réflexion (16) de la partie d'actionnement d'embrayage configuré pour réfléchir un actionnement de la partie d'actionnement d'embrayage (18) dans l'embrayage (4), où l'actionnement de la partie d'actionnement d'embrayage (18) est réfléchi dans l'embrayage (4) lorsque ce dernier est mis en prise selon un actionnement de la partie d'actionnement d'embrayage (18), et une partie d'instruction de changement de vitesse (10) qui est actionnée par le conducteur et qui émet une instruction de changement de vitesse à la transmission,
comprenant en outre :
un moyen (20) de détection d'état d'arrêt de véhicule configuré pour détecter un état d'arrêt du véhicule,
un moyen (10a) de détection d'instruction de changement de vitesse configuré pour détecter un état d'instruction de la partie d'instruction de changement de vitesse (10),
un moyen (18a) de détection d'actionnement d'embrayage configuré pour détecter un état d'actionnement de la partie d'actionnement d'embrayage (18), et
un moyen (16) de maintien d'embrayage libéré configuré, lorsque a) le moyen (20) de détection d'état d'arrêt de véhicule a détecté que le véhicule est arrêté, b) le moyen (10a) de détection d'instruction de changement de vitesse a détecté que la partie d'instruction de changement de vitesse (10) est mise dans une position de non-entraînement, et c) le moyen (18a) de détection d'actionnement d'embrayage a détecté un actionnement de libération de l'embrayage (4), pour arrêter la réflexion de l'actionnement de la partie d'actionnement d'embrayage (18) dans l'embrayage (4) par le moyen de réflexion (16) de la partie d'actionnement d'embrayage, où, lorsque la réflexion de l'actionnement de la partie d'actionnement d'embrayage (18) est arrêtée, l'embrayage (4) est amené à rester dans un état débrayé indépendamment du fait que la partie d'actionnement d'embrayage (18) est libérée ou non, et pour maintenir l'embrayage (4) dans un état libéré à partir du moment après lequel une condition d'arrêt de réflexion de l'actionnement de la partie d'actionnement d'embrayage (18) dans l'embrayage (4) a été satisfaite lorsque le moyen (18a) de détection d'actionnement d'embrayage a détecté un actionnement pour commuter l'embrayage (4) d'un état libéré à un état appliqué ou un actionnement pour appliquer l'embrayage (4), jusqu'à ce qu'une condition de réflexion d'actionnement de la partie d'actionnement d'embrayage (18) dans l'embrayage (4) soit satisfaite à nouveau, où la condition de réflexion de l'actionnement de la partie d'actionnement d'embrayage (18) dans l'embrayage (4) est satisfaite à nouveau à la fois par la détection par le moyen de détection d'actionnement d'embrayage de l'actionnement de libération de l'embrayage (4) dans la condition c) qui est commuté une fois à un actionnement d'application de l'embrayage (4) et puis en retour à l'actionnement de libération de l'embrayage (4), et par la détection par le moyen (10a) de détection d'instruction de changement de vitesse de la partie d'instruction de changement de vitesse (10) qui est déplacée hors de la position de non-entraînement ou dans une position d'entraînement.

2. Appareil de commande de véhicule selon la revendication 1, dans lequel la condition de réflexion de l'actionnement de la partie d'actionnement d'embrayage (18) dans l'embrayage (4) est à nouveau satisfaite par le véhicule ayant commencé à être entraîné.

3. Appareil de commande de véhicule selon l'une quelconque des revendications 1 et 2, comprenant en outre :
un moyen d'avertissement (16) configuré pour émettre un avertissement par rapport à une instruction de changement de vitesse lorsque le moyen (10a) de détection d'instruction de changement de vitesse a détecté que la partie d'instruction de changement de vitesse (10) se déplace hors de la position de non-entraînement ou dans une position d'entraînement lorsque le moyen (16) de maintien d'embrayage libéré arrête la réflexion de l'actionnement de la partie d'actionnement d'embrayage (18) dans l'embrayage (4) par le moyen de réflexion (16) de la partie d'actionnement d'embrayage et maintient l'embrayage (4) dans l'état libéré.

4. Appareil de commande de véhicule selon l'une quelconque des revendications 1 et 2, comprenant en outre :
un moyen de commande d'embrayage automatique configuré pour appliquer et libérer automatiquement l'embrayage (4) sur la base d'une condition d'entraînement d'un embrayage automatique, et
un moyen de démarrage de commande d'embrayage automatique configuré pour actionner le moyen de commande d'embrayage automatique lorsque le moyen (10a) de détection d'instruction de changement de vitesse a détecté que la partie d'instruction de changement de vitesse (10) se déplace hors de la position de non-entraînement ou dans une position d'entraînement lorsque le moyen (16) de maintien d'embrayage libéré arrête la réflexion de l'actionnement de la partie d'actionnement d'embrayage (18) dans l'embrayage (4) par le moyen de réflexion (16) de la partie d'actionnement d'embrayage et maintient l'embrayage (4) dans l'état libéré.

5. Appareil de commande de véhicule selon l'une quelconque des revendications 1 à 4, dans lequel le moyen de réflexion (16) de la partie d'actionnement d'embrayage est configuré pour réfléchir l'actionnement de la partie d'actionnement d'embrayage (18) dans l'embrayage (4) en reliant électriquement la partie d'actionnement d'embrayage (18) et l'embrayage (4).

6. Appareil de commande de véhicule selon l'une quelconque des revendications 1 à 5, dans lequel, lorsque le conducteur applique une force d'actionnement à la partie d'actionnement d'embrayage (18), la partie d'actionnement d'embrayage (18) est configurée pour émettre un signal à l'embrayage (4) de sorte que l'embrayage (4) soit amené à être dans l'état libéré, et lorsque le conducteur n'applique pas une force d'actionnement à la partie d'actionnement d'embrayage (18), la partie d'actionnement d'embrayage (18) est configurée pour émettre un signal à l'embrayage (4) de sorte que l'embrayage (4) soit amené à être dans l'état appliqué.

7. Appareil de commande de véhicule selon la revendication 1, dans lequel le moyen de réflexion (16) de la partie d'actionnement d'embrayage est configuré pour réfléchir un actionnement de la partie d'actionnement d'embrayage (18) dans l'embrayage si la partie d'actionnement d'embrayage (18) est abaissée à une valeur supérieure à une valeur seuil.

8. Appareil de commande de véhicule selon la revendication 1, dans lequel le moyen de réflexion (16) de la partie d'actionnement d'embrayage est configuré pour réfléchir à nouveau un actionnement de la partie d'actionnement d'embrayage (18) dans l'embrayage si une vitesse du véhicule devient supérieure à une valeur seuil (SPDmin).
